# EUROPEAN PATENT SPECIFICATION

(11) **EP 4 601 854 B1**
(45) Date of publication and mention of the grant of the patent: **05.08.2026**
(21) Application number: 23805597.4
(22) Date of filing: 14.11.2023
(51) Int. Cl.: B29C 55/26

(54) **SYSTEM AND METHOD FOR BIAXIAL EXPANSION OF POLYMERIC PIPE**
SYSTEM UND VERFAHREN ZUR BIAXIALEN EXPANSION EINES POLYMERROHRS
SYSTÈME ET PROCÉDÉ D'EXPANSION BIAXIALE DE TUYAU POLYMÈRE

(30) Priority: 16.11.2022 NL 1044470
(43) Date of publication of application: 20.08.2025
(73) Proprietor: Wavin B.V., 1118 BK Schiphol (NL)
(72) Inventor: COMPAGNE, Jan, 1118 BK SCHIPHOL (NL); NIJLAND, André, Ewout, 1118 BK SCHIPHOL (NL); STRAVERS, Jeroen, 1118 BK SCHIPHOL (NL)
(74) Representative: Houghton, Mark Phillip
(86) International application number: PCT/EP2023/081776
(87) International publication number: WO 2024/105044

(56) References cited:
- US-A- 5 942 171
- US-A1- 2022 072 752

## Description

### Background:

The present invention relates to a system used to manufacture tubing or pipes from plastics. In particular, the invention relates to the formation of biaxially orientated pipes from suitable thermoplastic materials, including oriented polymers such as polyethylene, polyester, and polyvinyl chloride (PVC). Such pipes are often used as pipes for transporting fluids such as water under pressure.

In such cases, the material used to form the pipe is heated during the manufacturing process. The plastic is then extruded to form a pipe. The pipe is then heated to an orientation temperature, for example above the glass transition temperature of the plastic is expanded. B In this process and at this temperature the molecules within the thermoplastic achieve orientation, and after the pipe is shaped from the heated material, the material is quickly cooled to keep the molecules in this orientation. By doing this the strength of the finished pipe increases, making the pipes more durable, and allowing them to carry larger volumes of fluid and/or be put under higher pressure without the risk of the pipe breaking.

More specifically, the above-mentioned pipes are formed by heating the chosen pipe material to a melt temperature, thereby reducing the material to a flexible preformed state. At this point, the preformed material is injected into a die to form a cylindrical shape to form a pipe. The pipe is then pulled over a mandrel configured to expand the initial cylinder to a desired diameter. Said mandrel for example comprises a conical shape with the radius of the cone increasing on moving downstream, that is in the direction of pipe movement until it reached the desired diameter, it is noted that this diameter may be slightly larger than that of the final pipe as the material may undergo some shrinkage as it is pulled from the mandrel and/or cooled in the cooling system. The expanded material is then pulled into a cooling system to freeze the material into shape, usually by spraying a cooling fluid onto the surface of the pipe. However, this method has some problems, in particular as the heated material is pulled there is a risk of the material becoming damaged, or deformed due to the friction with the apparatus causing the material to become stuck or torn. Further, the material should remain at the orientation temperature until the material reaches the cooling system, in other words, the material must remain at the orientation temperature while the pipe is being formed. Therefore, there is a need to provide heating to the above-mentioned system. The methods and systems as described above are known in the art.

An improved system is presented in NL7316378 (Petzetakis 1973), this system is similar to the system described above, however, the tie bar at the centre of the mandrel is hollow to allow a lubricant to be injected upstream of the mandrel. In particular, a lubricant is injected near the narrow, upstream end of the conical mandrel, with the intention that the pipe material would pull the lubricant as it moves over the mandrel, thereby lubricating the mandrel and reducing the friction acting between the mandrel and the pipe material. A problem with this system is that there was often not enough frictional force between the lubricant and the pipe material to achieve the desired spreading of the lubricant over the mandrel. Additionally, the pooling of the lubricant at the base of the mandrel could exert pressure on the pipe material causing fluctuations in the pipe surface, in particular areas where the pipe walls are thinner which may lead to weak points in the pipe's surface.

EP0371769 (Ward/BTG 1988) provides an alternative system wherein the conical mandrel further comprises a cylindrical portion extending downstream the conical portion of the mandrel, wherein the cylindrical portion has the desired diameter for the pipe being formed. It is noted that this system forms the pipe as described above, but unlike Petzetakis's design, there is explicitly no lubricant or film used to reduce friction between the mandrel and the pipe material. Instead, the shape of the conical portion of the mandrel is designed to help move the material smoothly over the surface of the mandrel. In particular, the conical portion of the mandrel does not have a point as the point is covered by the pull bar which creates a small step that allows a small amount of expansion before the material impacts the mandrel. As a result, less stress is put onto the pipe material, reducing the risk of the material becoming damaged.

In WO2013/151420 (Hoppmann 2013) an improved expansion system is provided wherein a hot fluid is used both as a lubricant and to help keep the pipe material at the desired orientation temperature. Specifically in this system, a hollow pull bar is used to inject a hot fluid at or near the broad downstream end of the conical portion of the mandrel, after which the hot fluid flows down the conical face of the mandrel. This way the fluid acts as a lubricant between the mandrel and the pipe material, the hot fluid also helps maintain the temperature of the pipe material during the expansion process. The fluid may also heat the mandrel and tie bar to help maintain the temperature of the fluid as it flows over the apparatus. The system also includes the use of cooling fluid within the cylindrical portion of the mandrel. This allows the internal surface of the pipe to be cooled to help harden the pipe material as it is pulled off the mandrel. Further, this system may include a chamber downstream of the mandrel which is filled with cooling fluid, wherein the fluid applies pressure to the pipe material to stop the pipe from shrinking as it cools leaving the mandrel. It is noted that this system requires a larger pull bar as there needs to be enough volume to circulate both the hot and cold fluid, thereby limiting the minimum size of the pipe that can be produced. it is also noted that the downstream fluid chamber is sealed using inflatable plugs so that the pressure of the air within the plugs can be adjusted with the pressure within the fluid chamber to produce the required expansion force. However, as these plugs are deformable, they may produce an inconsistent force on the pipe material leading to deformities, or wobbles, within the pipe wall. Also, there is a risk of the fluid in the chamber may escape which could damage the downstream equipment in the manufacturing system. Lastly, as both the hot and cold fluid contact the pipe material, when using liquids like water, there is a risk that droplets may remain on the surface of the pipe which may result in an inconsistent temperature along the pipe wall that may result in weak points forming within the wall structure that may lead to the pipe becoming damaged further in the system, or have an increased risk of structural failure when in use.

US5942171 discloses a tube that is extruded from a thermoplastic material and is then forced over a mandrel at an orientation temperature of the material including a tie bar with a return circuit for a cooling fluid.

US2022/072752 discloses a method for producing a biaxially oriented tube from thermoplastic material, wherein a tube in preform condition is extruded from thermoplastic material and is subjected to a temperature conditioning including return of a cooling fluid.

Therefore, there is a need to provide an improved system that does not suffer from the deficiencies of the previous systems described above.

In particular, the present invention seeks to improve upon the hot and cold fluid system defined in Hoppmann. By providing a system that removes the need to circulate both the heated and cooled fluids to different parts of the expansion system. In this case, the system removes the need to circulate both fluids and removes the need for the inflatable plugs described above, all reducing the risk of the pipe surface becoming deformed and reducing the amount of fluid that needs to be supplied to the system, thereby simplifying the system without reducing the quality of the pipe being formed. This may be achieved by altering the elements downstream from the mandrel.

### Summary

The present invention in its various aspects is as set out in the appended claims.

The present invention provides an improved system for the biaxial expansion of polymeric pipe material to form pipes with desired dimensions. The system comprises an elongate former over which the polymeric pipe is radially expanded as it is passed lengthwise, that is, the system is configured to convey the polymeric pipe over the former at elevated temperature, such that the polymeric pipe is rendered plastic and biaxially, so radially and axially, deformable. The former comprises axially, so lengthwise, sequentially connected sections of a tie bar, a mandrel, and a cooling section, that sequence defining a downstream direction for pipe travel.

The tie bar may comprise an outer shell, over which the pipe is configured to pass, within the shell are a plurality of channels that are configured for transporting fluids to and from the tie bar itself, and/or to the mandrel, and/or to the cooling section as described herein. The plurality of channels may consists of a first input channel configured to transport a first fluid from a first channel in the tie bar to the mandrel; a second fluid channel configured to transport the first fluid from the mandrel back to a second channel in the tie bar so that the first fluid can be recirculated, and a third fluid input channel configured to transport a second fluid from a third channel in the tie bar to the cooling section. The second fluid is not recirculated, which allows for a more compact system, thus allowing pipes of smaller diameter to be processed.

The mandrel is configured to radial expand the pipe as it passes over the surface of said mandrel. The mandrel may comprise a frustoconical portion, which comprises one or more sections, wherein each section is sloped with its narrower end proximate to the tie bar, pointing in the upstream direction, and arranged so that the diameter of the conical portion of the mandrel increases as the mandrel extends downstream. The frustoconical portion may further comprise a plurality of apertures on the surface of the mandrel for injecting the first fluid, transported by the tie bar, for lubricating the passage of pipe material over the conical portion of the mandrel. It is noted that, in operation, the injected first fluid is preferably be a hot or heated fluid, at or near the orientation temperature of the pipe material, this is the temperature where the pipe material becomes biaxially orientated, this way the system can ensure that the pipe material remains at or near the orientation temperature to keep the pipe material deformable as it passes over the mandrel. It is also noted that the pressure of the injected fluid can be altered to provide additional radial force to expand the pipe material further, to allow the pipe size to increase beyond the size of the mandrel.

Further, the mandrel may comprise more apertures located on the surface of the mandrel for collecting the injected fluid from the mandrel for recirculation. This allows the hot fluid to be recirculated to ensure the fluid remains at a suitable temperature to keep the pipe material at the orientation temperature. It also allows recovery of the first fluid so that the first fluid does not enter the pipe being manufactured (which is the product downstream of the whole assembly). The aperture for injecting the first fluid is positioned axially downstream from the apertures configured to collect the fluid for returning the fluid for transport upstream by the tie bar. This way the system ensures that the lubricating (first) fluid flows counter-current to the direction of travel for the pipe material. Though the flowing fluid reduces the friction between the pipe material and the mandrel, the counter-current flow also helps to increase the contact pressure between the pipe material and the fluid, this, in turn, helps keep the inner surface of the pipe material close to the surface of the mandrel, even when the pressure of the fluid is increase. This provides a more easily controlled process. In previously used increasing the pressure of the lubricating fluid has caused the pipe material to expand to a point where it hangs loosely over some or all of the mandrel, which may cause bubbling of the pipe surface, where the pipe radius is inconsistent which deforms the pipe surface causing structural weakness within the pipe. However, with the increased contact friction from the counter-current fluid flow, the system ensures the pipe material remains close to the mandrel avoiding this bubbling effect.

Further, the system comprises a cooling section, in its simplest form this cooling section comprises a cooling chamber. Wherein the cooling chamber is downstream from the mandrel and configured to receive the polymeric pipe material from the mandrel. The cooling chamber is defined upstream by the rear face of the mandrel and downstream by a sealing member and axially by the received polymeric pipe material from the mandrel. In operation the cooling chamber is configured to receive a volume of a second fluid, which is different from the first fluid received by the mandrel, this second fluid consists of a gas, preferably air. Wherein the chamber fills with a volume of the second fluid so as to cool the pipe material. It is also noted that the volume of fluid within the cooling chamber may be chosen so as to produce outward pressure on the surface of the pipe material, this can be used to both increase the rate of heat exchange between the fluid and the pipe material but to also ensure that the pipe material does not constrict during the cooling effect. This is because as the pipe material cools below the orientation temperature the pipe material may shrink and the material contracts, thus making the width of the pipe smaller than the width of the mandrel used to expand it, to limit or stop this constricting effect the cooling chamber may increase the volume of the second fluid within the cooling chamber so that the pressure of the fluid provides sufficient outward force to counteract the constriction caused by the cooling until the pipe material is frozen in place, thereby ensuring the pipe as the desired dimensions during the cooling process.

This second fluid is received from the third channel within the tie bar, via a first pressure regulator. This pressure regulator may be coupled to the rear surface of the mandrel, or a point on the surface of the tie bar within the cooling chamber. Wherein the first pressure regulator is configured to control the flow of the second fluid into the cooling chamber. Further, the downstream member of the cooling chamber comprises a second pressure regulator for releasing the second fluid downstream from the cooling section. This may be used to reduce the volume of the fluid within the cooling chamber, to adjust the pressure within the chamber, it may also be used as a means of regulating the temperature of the fluid within the chamber by releasing the now heated fluid, at which point the first regulator would inject more fluid to maintain the desired pressure with the injected fluid being a cooler temperature than the fluid within the chamber. and wherein the cooling section comprises no means for returning the fluid for transport upstream by the tie bar. It is noted that the second fluid is preferably air so that the fluid can be released when it is no longer needed without negative effects on the system or the surrounding area, as the fluid would not need to be cleaned and would not create a hazard near the system, it is noted that if the fluid was water or another liquid than it may damage systems that are downstream from the cooling chamber, or may create puddles that are a slip hazard to personnel working on the system.

It is also noted that there would be fewer risks should the fluid leak out of the chamber when the fluid consists of air for the same reasons described above.

To summarise, the second fluid supplies the cooling chamber and serves to provide a pressure within the pipe, after the mandrel and before the sealing member, this maintains the diameter of the pipe during the cooling process, process which inherently serves to contract the pipe during cooling.

Alternatively, the second fluid can be the cooling fluid. Another benefit of using a gas as the cooling fluid is that the gas provides the system with better pressure control within the cooling chamber, for the gas would provide a consistent pressure throughout the chamber, while a liquid may gather more at the bottom of the chamber, applying a greater force to the bottom surface of the pipe material, which could lead to deformation of the profile of the pipe. Likewise, the spreading of the gaseous fluid throughout the chamber would provide consistent cooling throughout the entire chamber, the cooling rate can also be increased, by increasing the pressure/volume of the gas within the chamber, and possibly by increasing the flow of the gas through the chamber using the pressure regulators, so as to increase the number of collisions between the gas molecules and the pipe material within the chamber. The gas also prevents droplets from forming on the surface of the pipe material, as such droplets can cause the cooling rate across the surface of the pipe material to fluctuate, as the areas with the droplets cool at a different rate from the surroundings. This change in the cooling could result in the molecules within the material may become misaligned creating weak points within the pipe structure, it may also cause parts of the pipe surface to become stretched as the colder parts of the surface of the pipe could shrink causing the warmer sections that are more elastic to stretch, again forming weak points within the pipe. However, by using gas within the cooling system the cooling will be consistent throughout the entire cooling system preventing these weak points from forming.

It is noted that in some cases, especially when creating a pipe with thicker walls, the air within the cooling chamber may be insufficient to produce the required cooling across the cross-section of the pipe. In particular, if only the inner surface of the pipe has cooled, leaving the outer surface and the inside of the pipe cross-section at or near the orientation temperature, the pipe may begin to stretch or deform. This may happen when the pipe is pulled downstream to other systems for further processing, as the warmer layers will be more elastic compared to the cooled inner surface causing the material to stretch when pulled downstream, it is also noted that in thicker pipes these elastic portions may have more mass than the cooled inner surface layer, and so these heavier elastic layers could even be able to stretch or deform the cooled layers.

To avoid this problem the system may also include an external cooling apparatus. In particular, one or more nozzles may be positioned to spray a cooling fluid onto the external surface of the pipe material within the cooling chamber, thereby allowing both the inner and outer surfaces of the pipe material to cool as the material moves through the cooling chamber. It is noted that the fluid, the external cooling fluid, used by this external cooling system may be the same fluid as that used within the cooling chamber. It is noted that it may be preferable to use air as the external cooling fluid for the same reasons described above, as there would be no need for a system to collect and recirculate the cooling fluid, and reduce risk to the surrounding systems and personnel if the fluid leaks. Note that if the air is used the nozzles would need to be placed closer to the pipe material surface and may risk damaging the material if there are any fluctuations in the pipe size therefore it may be preferable to use another fluid or have a system that monitors the size of the pipe material to move the position of the external cooling system to the desired distance from the pipe material. Alternatively, the external cooling fluid may be a liquid, such as water, however this is less preferred as the water needs to be recovered after use so is to provide a dry end product, the polymeric pipe.

It is be noted that an external cooling fluid may be used, in conjunction with the second fluid also being configured as a cooling fluid, this is particularly beneficial when dry, the conventional form, is used as the second fluid due to its lower heat capacity.

The cooling section may also comprise a cylindrical portion that the pipe material is pulled over after and similar to the conical mandrel. This cylindrical portion would be positioned between the mandrel and the cooling chamber. The cylindrical portion comprises a cylinder that extends downstream from the rear face/wide end of the conical mandrel, wherein the diameter of the cylindrical portion is no more than the maximum diameter of the mandrel. In some cases, the cylindrical portion may be slightly smaller than the downstream end of the conical mandrel to account for the pipe material contracting slightly as the material starts to cool and thus stopping the binding of the pipe onto the cylindrical portion as it shrinks.

In such a case the widest point of the conical mandrel would be wider than the desired radius of the pipe to compensate for the pipe material shrinking before it cools. The cylindrical portion further comprises a plurality of surface apertures configured for injecting the second fluid, consisting of gas, preferably air transported from the tie bar, for lubricating the cylindrical portion, and further apertures for collecting the second fluid, at which point the fluid may return to the tie bar, or be directed into to the cooling chamber via a channel connected the first pressure regulator. The apertures for injecting the second fluid are positioned downstream from the apertures configured to collect the second fluid. This arrangement of the apertures ensures that the second fluid flow counter-current to the direction of the pipe material. Recovery of the second fluid as an optional feature. As previously noted, the counter-current flow of the fluid helps to increase the contact friction of the pipe material, in this case between the pipe material and the cylinder, this prevents the pipe material from coming loose around the cylinder ensuring the surface of the pipe remains even, with no sagging or deformations which could negatively impact the structural integrity of the formed pipe. Additionally, the pressure of the second fluid between the pipe material and the cylinder may be adjusted to apply a radial force to the pipe material to prevent the pipe material from shrinking as it cools. This is an important feature of the second fluid, it enabling improved process control without a waste stream to be recovered, although it is to be realised that the second fluid, particularly when the sick second fluid is a gas and not returned may be for the purposes of providing the cooling function without necessarily requiring an internal pressure sufficient to significantly affect the shrinking.

It is noted that in operation the second fluid that passes over the cylinder is preferably at a temperature below the orientation temperature of the polymeric pipe material so that the pipe material cools as it passes over the cylinder. In this situation, to prevent, or reduce, heat transfer between the injected first and second fluid there is preferably an insulating layer positioned between the conical mandrel and the cylindrical portion. There may also be another insulating layer configured to surround the pipe material at the point where the conical mandrel meets the cylindrical portion, this layer may preferably be in the form of a rubber ring (a silicon elastomer, low friction, being preferred) that can be stretched to match the diameter of the pipe being formed. This rubber ring helps to prevent fluid from the cylindrical portion from moving over the mandrel, or vice versa, thereby further preventing heat exchange between the first and second fluids. This helps to maximize the heat exchange between the pipe material and each of the first fluid and the second fluid. This in turn helps to keep the pipe material at the orientation temperature as it passes over the conical mandrel and increases the temperature differential between the pipe material and the second fluid to increase the heat exchange between the pipe material and the second fluid.

The cooling section may further comprise a housing that surrounds the cooling chamber, wherein said housing is configured in operation to form a partial vacuum around the pipe material within the cooling chamber. This is particularly useful when the second fluid is primarily provided with a cooling function and not a radial pressure function to maintain the pipe diameter. The housing may comprise valves that may be coupled to a pump to control the vacuum within the housing, with the system controller being configured to use the valves and pumps to control the pressure reduction over atmospheric pressure of the partial vacuum within the housing. The housing may use this vacuum to effectively provide outwards force on the surface of the pipe material (i.e. by increasing the internal/external pressure differential) as an alternative means of applying a force to counteract the shrinking of the pipe material as it cools within the cooling chamber. The housing preferably comprises a series of nozzles configured to spray a cooling fluid onto the outer surface of the pipe material to increase the rate of cooling. It is noted that the cooling fluid sprayed by the housing nozzles may differ from the second fluid within the tie bar. The spray may be water due to its high specific heat capacity. The water is preferably maintained at a volume and temperature so that the water leaves the chamber as vapor so as to avoid disposal problems. It is also noted that by forming a partial vacuum within the housing the system can increase the amount of cooling occurring within the cooling chamber as the vacuum allows the fluid on the surface of the pipe to evaporate faster, or otherwise transfer heat away from the pipe material at a faster rate. This facilitates that water leaves the chamber as vapor so as to avoid disposal problems.

As noted above it is preferable for the second fluid used in the cylindrical portion and cooling chamber to consist of air, preferably to comprise air, it is also noted that in the preferred embodiment the first fluid used to lubricate the conical portion during the expanding process comprises water, preferably with an in use temperature between 98 to 102°C. it is noted that it is preferable for the first fluid to be a liquid as this would increase the rate of heat exchange between the first fluid and both the mandrel and pipe material, to help ensure the expansion portion of the system remains at or near the orientation temperature so that the pipe material will be biaxially orientated throughout the expansion process. It is noted that due to the better heat transfer rate when using water, the first fluid can be injected at a lower pressure when compared to the second fluid used on the cylinder. In some cases, the water as the first fluid may have a pressure in the range of 1 to 10, preferably, 1 to 5, more preferably 1 to 2 bar (1bar = 0.1 MPa), though this may be increased if the system needs to apply more force to the pipe material to increase the rate of expansion. In comparison, the air used as the second fluid injected into the cylindrical portion may have a pressure of 10bar or more, to match the force exerted by the first fluid and to increase the rate of heat exchange with the pipe material for better cooling. It is noted that the second fluid that to the cooling chamber, such as after a (second) pressure regulator, may have a pressure of only 1-2 bar, which would be controlled using the two pressure regulators coupled to the cooling chamber. However, a pressure of 10 bar greater is preferred, the upper limit being determined by practical constraints, such as 30 bar. A preferred range is 15 to 25 bar. These ranges prevent collapse of the pipe inwards during cooling. The second fluid is preferably used at lower pressure in the cooling chamber to reduce the risk of the fluid leaking from the cooling chamber, and also to reduce the damage caused should the fluid leak out of the chamber as the air inside the chamber would have a similar or the same pressure as the surrounding air so there would be little to no effect if the second fluid leaks. By leakages meant loss proximate to the elongate former as inherently a nonreturn for the second fluid means that the second fluid is lost, it is simply lost at an end of the pipe which is, in production normally far remote from the elongate former. It is also noted that the increased pressure is not necessary within the cooling chamber when the chamber housing is used, as the vacuum surrounding the pipe material provides the force to maintain the pipe shape, instead of the fluid within the pipe.

In the present invention, one or more of the cooling fluids may be a gas, preferably. In this respect, it is further preferable that the gas is provided at a humidity in the range of 20 to 90%. More preferably from 30 to 70%. Most preferably the first fluid is water, up the aforementioned temperature and the second fluid is are with the stated humidity. This is particularly useful when the second fluid is used in its cooling capacity as it increases the specific heat capacity of the fluid. This is not normal in the industry as there is typically dried so that on compression for delivery water residues do not accumulate, such as in a compressor holding tank. However, in the present invention providing a humidified gas greatly increases the thermal capacity of the cooling fluid, and as such not only does this mean that less gas is required for a given cooling by removing heat, but that high gas flow rates and pressures that may be required to simply provide the desired heat removal can be avoided. Control of the apparatus during operation and focus on optimal levels of lubrication and maintenance of the correct pipe dimensions and therefore the more readily optimized. Not appreciating this point is a reason why the hitherto water has been used as the coolant. Similarly using humidified gas means that the temperature differential between the coolant and the surface to be cooled can be lower for a given flow rate and therefore pressure differentials between the inlet and output of fluid onto the cooling surface can be minimized to give more even pressure control over a given length of the apparatus. This enables better control and hence more uniform pipe dimensions to be achieved.

Optionally, the upstream of the cooling chamber may comprise a sizing device that is configured to monitor the size of the pipe entering the cooling chamber, to provide feedback to the control system to ensure the formed pipe has the desired dimensions, such as by adjusting coolant pressure. It is noted that the sizing device may include one or more sensors to monitor the size of the pipe material at different points in the system, such as over the tie bar, conical mandrel, or cylindrical portion. These sensors may include a friction sensor that monitors the force exerted by the pipe material to determine the dimensions of the pipe, alternatively, the sensor may be in the form of a laser or signal generator and a respective receiver wherein the receiver monitors the signal or laser reflected off of the pipe material or transmitted through the pipe material to determine the dimensions of the pipe.

Once the pipe dimensions are determined the system controller may compare the result to the desired pipe dimensions. On determining that the pipe dimensions are outside of a desired value or acceptable range the controller may be configured to actuate the system in order to adjust the pipe dimensions back to the acceptable value or range. These adjustments may include adjusting the pressure of either the first or second fluid within the expansion portion of the system or the cooling system. In some cases, the controller may open or close the apertures used to inject the fluid from the tie bar, or the apertures used to collect the fluid for recirculation, thereby changing the volume of fluid within the pipe material to either increase or decrease the radial pressure applied to the pipe material by increasing or decreasing the volume of fluid. The controller may use the first and second pressure regulators of the cooling chamber to adjust the amount of fluid within the cooling chamber to again adjust the pressure inside the cooling chamber which in turn changes the outward radial force exerted onto the pipe material within the cooling chamber to adjust the size of the pipe material. The controller may also be configured to adjust the partial vacuum which surrounds the pipe material in the cooling chamber housing to adjust the outward radial force applied to the pipe material within the housing. This may be achieved by using valves to inject or remove air from the housing thereby changing the force differential created by the vacuum, as the lower the level of air in the housing the higher the force created by the vacuum.

In some cases, the sizing device may further comprise a sizing apparatus that can be used to apply a force to the pipe material to shape the material to the desired size, based on feedback from the sensor readings, wherein on determining that the dimension of the pipe material is beyond the desired value or acceptable range the controller may actuate the sizing apparatus to correct the pipe material. For example, the sizing apparatus may comprise a block or frame which may be raised or lowered, when lowered into the path of the pipe material, this block will push the material inwards, towards the tie bar and the centre of the pipe, thereby reducing the pipe size. It may be preferable for such a block or frame to comprise a round aperture that can increase or decrease its diameter to the desired size of the pipe to apply force evenly across the entire circumference of the pipe. In some cases, the shaping block may be sloped so that the size of the pipe can be adjusted by moving the sizing apparatus upstream or downstream, relative to the cooling chambers, to adjust the pipe size instead.

It is noted that one of the limiting factors when choosing the desired pipe dimensions when using a system as described above is the size of the tie bar. The smallest possible diameter for the formed pipe is proportional to that of the tie bar used in the system. This is because the extent of pipe expansion on a mandrel is limited by optimal polymer stretching for alignment. Therefore, it is preferable to have available a smaller diameter tie bar, to thereby allow the system to produce a wider range of pipe sizes, or at least a smaller overall diameter of the pipe. Current tie bar diameters are limited to a radius of about 36 mm.

In the pipe forming system, the tie bar comprises an outer shell, and inside said shell is a plurality of channels for carrying fluid up or downstream to a desired part of the system. in currently used systems these tie bars would contain four separate channels; two channels for moving the heated fluid used during the expansion process, one channel carrying the heated fluid downstream for use, and another for carrying the used fluid upstream for recirculation, and two channels for carrying the cooling fluid to and from the cooling system, to either be injected into the cooling chamber or to be recirculated. It is noted that in some cases, the channels for the cooling fluid may be insulated, this prevents undesired heat exchange between the two fluids and the channels, but these insulating layers increase the size of the channels and further increase the size of the tie bar.

In the claimed system, the cooling chamber does not recirculate the second fluid therefore there are only three channels within the tie bar. By having fewer channels, the tie bar may use a smaller shell reducing its overall size. In the claim system there is no recirculation of the second fluid, beyond that which may incidentally occur due to air being discharged into the atmosphere and potentially reused very indirectly.

This concept may be taken further by arranging the channels within the tie bar to be concentric, with the channels positioned within one another. In particular, a combination of concentric channels and the three overall channels allows an even more compact tie bar design. Specifically, the present invention enables biaxially expanded polymeric pipe to be produced with internal diameter of below 25 mm, which has been a challenge in the industry to date. This is because the configuration of the present invention enables a reduction of the radius of the tie bar to as low as 24mm, and potentially below. For this system described above the centermost channel would be the channel used for the second fluid used by the cooling chamber, as mentioned this fluid would consist of air so the smaller volume would help to transport the air more efficiently and would allow the fluid to reach higher pressures more easily, especially when reaching the desired pressure of 10bar or above, when used for the cylindrical portion. The middle channel would be the second channel used to carry the first fluid upstream for recirculation, as this channel carries the used first fluid, which would be at a temperature above that of the second fluid but below the orientation temperature, this lower temperature reduces the risk of heat exchange between the second and third channels. Lastly, the outer channel would be the first channel that carries the heated first fluid downstream to the mandrel.

The use of concentric channels not only addresses the problem of providing reduced size but provides additional advantages to optimise the size reduction. In particular, since the fluids flowing in the channels may be at different temperatures then there is differential expansion and contraction between the various channels. By making these channels concentric the resultant forces are distributed radially and in an even manner and therefore the channels may be constructed of lightweight material as the need for construction with stronger sections to avoid distortion is greatly reduced. Further, joining concentric channels, particularly with the lowest temperature pipe in the centre (for example coolant gas) and the highest temperature channel on the outside (for example hot water out, therefore the central channel being the water return) provides a graduated change, for a given material of channel construction, in change of channel dimensions with changing temperature and thus expansion joints are simpler and more constant packs to construct. Indeed, expansion joint as such may not be required, a symbol O-ring seal may be sufficient to enable elongate expansion and contraction and accommodate the more limited radial movement. Nevertheless, known systems do not use this arrangement of channels since it provides a harder to construct equivalent cross-sectional area for outgoing and return fluids, such as first and second channels. This however has not proven to be as big a problem as was first thought although buckling of the channels is known risk.

This is particularly so in conjunction with the second fluid being a gas as no return conduit is required. Further, the use of gas, particularly air, having a low viscosity can achieve a high flow rate and also having a low heat capacity removes the seat from the adjacent channel and therefore reduces the effects of thermal expansion and contraction, including distortion and elongation.

A high gas flow rate of the second fluid, such as greater then 1 ms⁻¹, preferably greater than 10 ms⁻¹, most preferably in the range 15 ms⁻¹ to 50ms⁻¹ provides a sufficiently low dwell time that heating of the second fluid is not significant when transferred using the third channel. It is also noted that due to the relatively low heat capacity of gasses, such as air, even humidified air, there will likely be a low rate of heat transfer between the channels, which may remove the need for insulation, however in some cases, especially when using other fluids in the third channel, the third channel may be surrounded by an insulating layer, this layer would preferably be made of PTFE. It is noted that there is also a risk of heat exchange between the first and second channels too, therefore it may also be desired to have a similar insulating layer around the second channel to prevent heat from being lost from the heated fluid in the first channel, this layer may also be made of PTFE. It is preferable to put this insulating layer around the second channel because the second channel would have a smaller surface area to cover reducing the amount of material needed and would help to keep the size of the tie bar to a minimum. It is also noted due to the fluid in the first and second channels being the same and being transported at or near the same pressure, the wall between these channels may be made thinner relative to the wall between the second and third channel, as there would be little to no pressure difference between the two sides of this wall. By making the wall between the first and second channels as thin as possible the size of the overall tie bar can be further reduced.

In summary, with all of the size-reducing features described above, the tie bar of the system can be reduced to a radius of 24mm, or below, a practical minimum potentially being as low as 10 mm, which is much smaller than in the current system which typically has a tie bar radius of around 36mm. this reduction would allow the claimed system to produce a range of smaller pipe diameters which are simply not possible to create with the current systems.

Another benefit of using a smaller tie bar is that the pipe material preform may be prepared with a thinner wall, and lower thickness, compared to other systems. This thinner preform, referring to the pipe material before it expands over the mandrel, allows the material to have a more consistent temperature over its cross-section throughout the pipe-forming process. this removes the need for additional heating between the die that shapes the preform and the mandrel. Therefore, by forming a smaller preform, around the smaller tie bar, the system can ensure the pipe material reaches a consistent temperature over the preforms cross-section more easily, which may allow the user to reduce the distance between the die and the mandrel, this reduces the size of the entire system allowing it to be incorporated into industrial systems more easily. The smaller preforms and thinner pipe materials may also allow the user to use a smaller cooling section, as again the smaller thickness of the pipe material would allow the cross-section of the pipe to be cooled at a faster rate, again reducing the size of the pipe forming system.

It is also noted that using a smaller tie bar may make the expansion process less stable, especially when using a larger mandrel, as the contact friction at the highest point of the mandrel would be much larger that the friction around the smaller tie bar. this change in pressure could lead to the pipe material being malformed. However, by using the mandrel described above with the counter current fluid flowing over the mandrel, this problem can be overcome as the fluid would increase the contact friction between the pipe material and the mandrel ensuring that the contact friction is consistent over the entire mandrel, thereby removing the risk of the pipe material becoming loose or stretch as it expands.

It is also noted that in embodiments that use a cylindrical portion, this change in contact friction can be more severe, for when the material cools and contracts around the cylindrical portion the contact friction between the cylinder and the pipe material can increase drastically as the material reaches the end of the cylinder portion. As noted this can increase the risk of the pipe material being stretched or damaged as it moves through the system. To help prevent this the cylinder may have a channel across the length of the cylinder that is filled with the second fluid. Specifically, the cylinder would be shaped so that the end portions are wider than the centre portion, wherein the second fluid is injected with a sufficient volume to fill the recessed central portion and have a consistent pressure throughout. This effect can be reduced by having the second fluid flow counter current to the movement of the pipe material. As the flow applies a fluid pressure and forms a local bubble that is frozen in place as the material moves to the end of the mandrel where the fluid consisting of air can escape, so the pressure reduces and the contraction of the pipe material makes the plastic lay flat on the end of the mandrel, it may also have a similar effect as the material moves over the end of the cylindrical portion, whereafter a new bubble is created.

The present invention is suitable for use in the invention relates to the formation of biaxially orientated pipes from suitable thermoplastic materials polymers such as Polyethylene (PE); Polypropylene (PP); Polyvinyl Chloride (PVC).

The mandrel of the present invention, in its structural elements, is preferably constructed from metal. Suitable metals include steel, stainless steel, nickel super alloy and titanium. As previously mentioned, insulating portions may be constructed from a polymer, such as PTFE. Hi wear areas may be constructed from materials such as tungsten carbide. However, the configuration of the present invention avoids considerable work because of the use of the fluids with which the mandrel is constructed/configured to be used.

The channels of the present invention are preferably constructed from stainless steel, nickel super alloy and titanium.

### Detailed description:

The present invention comprises an improved system for performing biaxial expansion of polymeric pipe material, this system is depicted within the following drawings:
Figure 1: depicts an example of the pipe forming system comprising a tie bar, mandrel, and cooling chamber.
Figure 2: depicts the system of Fig.1, with the addition of a colling cylindrical portion between the mandrel and the cooling chamber.
Figure 3: depicts the system of Fig.2, with the addition of a cooling chamber housing.
Figure 4: depicts an example of a currently used tie bar which contains 4 channels
Figure 5: depicts an improved tie bar used by the invention which contains 3 concentric channels.

The systems of these figures comprise the following features:
- 10 -: System for biaxial expansion
- 20 -: Polymeric pipe material
- 30 -: Tie bar
- 32 -: Outer shell of the tie bar
- 34 -: First channel
- 36 -: Second channel
- 38 -: Third channel
- 40 -: Mandrel
- 50 -: Cooling chamber
- 52 -: First pressure regulator
- 60 -: Sealing member
- 62 -: Second pressure regulator
- 70 -: Cylindrical portion
- 80 -: Housing of the cooling chamber
- 82 -: Nozzles
- 90 -: Insulating layer

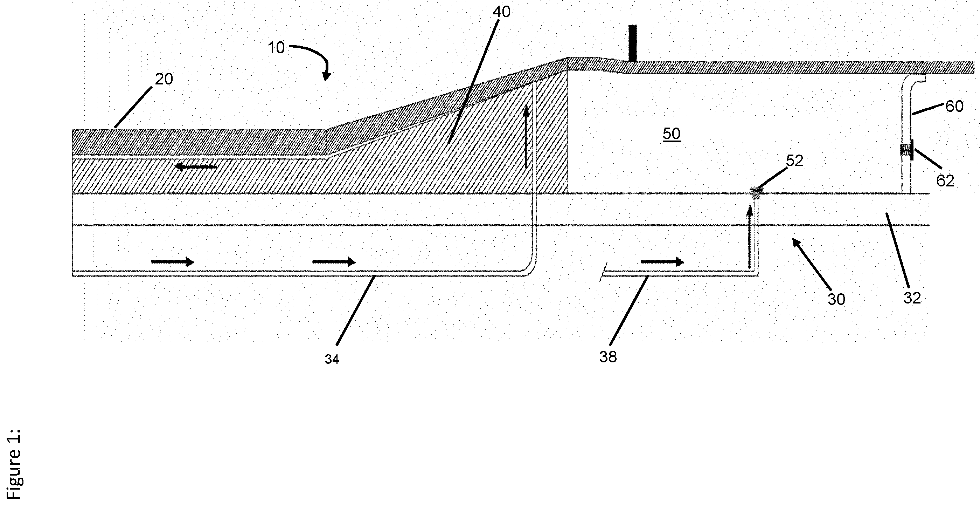

Figure 1 depicts an example of the claimed system 10 for the biaxial expansion of a polymeric pipe 20, wherein the system comprises a tie bar 30, mandrel 40, and a cooling system which in this example comprises only a cooling chamber 50. In this example, the cooling chamber 50 comprises a space that is formed between the downstream side of the mandrel, the pipe material flowing off the mandrel, and a downstream sealing member 60.

When in use a preformed pipe material is initially shaped using a die and heated to the chosen material's orientation temperature, a temperature at which the molecules of the pipe material will start to align in the biaxial direction. Once the pipe material is prepared it will pass through the expansion system to produce a pipe with the desired dimensions, by having the material be pulled downstream via the tie bar 30, then the material is cooled to freeze the particles in place and form the desired pipe.

In this system 10, the tie bar 30 comprises an outer shell 32, inside the shell 32 is a plurality of channels for transporting fluids to different portions of the system 10. In particular, the tie bar 30 may transport two fluids, the first fluid is used by the mandrel 40 for use during the expansion process, and the second fluid is transported to the cooling system for use during the cooling process. In some cases, one or both of these fluids may be collected into additional channels in the tie bar 30 to be recirculated. It is noted that the first fluid should be at a hotter temperature than the second fluid. More specifically, the first fluid should be heated to a temperature equal to or near the orientation temperature of the pipe material, this way the fluid could help keep the pipe material at the orientation temperature throughout the expansion process. While the second fluid is preferably at a lower temperature as the fluid is used by the cooling system to reduce the temperature of the pipe material after expansion to freeze the particles of the material into the biaxial orientation. To transport these fluids there may be a plurality of smaller outlet channels coupled to each of the channels 34,36,38 within the tie bar 30 for controllably moving each fluid to and from the tie bar 30.

The mandrel 40 is positioned around the tie bar 30 at a point downstream from the die used for preparing the pipe material. The mandrel 40 is configured to expand the pipe material as it passes over the surface of the mandrel 40. For this reason, the mandrel 40 should have a conical shape that increases in diameter as it moves downstream, with the widest point of the mandrel 40 having the same radius as the desired radius of the finished pipe, though sometime the mandrel 40 may be slightly wider than the desired pipe dimensions to account for the pipe material shrinking slightly as it cools. It is also noted that the sloped sides of a conical mandrel help to uniformly expand the pipe material which helps prevent the risk of deforming the pipe surface as it expands, as any irregularities in the pipe surface could form weak points that may compromise the structural integrity of the pipe when in use. it is also noted that in some cases the mandrel 40 may comprise a plurality of conical-shaped portions, wherein each cone increases in diameter as the mandrel extends down steam, with a cylindrical portion positioned in between each cone, by incorporating these different shapes the mandrel may use a steeper slope to allow more rapid expansion of the pipe material, with the plateau created by the cylinders between each cone help to keep the pipe material in contact with the mandrel, as the steeper slopes increase the risk of the pipe material becoming loose as the pipe material expands, this may cause the pipe material to expand at an irregular, or a non-uniform rate, that is to say, the loose portion of the material may expand at a different rate relative to the rest of the pipe, leading to deformations in the pipe surface.

In the preferred embodiment depicted in figures 1 to 3, the mandrel 40 would be conical as described above but would have the first fluid from the tie bar 30 injected into the space between the mandrel 40 and the pipe material, via apertures in the mandrel surface that are connected to the fluid channel 32 within the tie bar 30. These injection apertures would be positioned at points in the downstream half of the mandrel 40 so that the fluid would flow upstream, following the slope of the mandrel 40. As noted before this fluid would be heated to maintain the temperature of the pipe material, but will also lubricate the mandrel 40 allowing the pipe material to be processed at a faster rate, by being passed over the mandrel 40 at a faster rate, with little to no risk of damaging the material.

It is noted that in a previously used system the fluid was injected near the upstream end of the mandrel with the intention that the flow of the pipe material would carry the fluid downstream, however, this method resulted in the fluid being spread unevenly causing parts of the pipe material to come loose as the pipe material that was not lubricated would be stretched by the faster moving lubricated portions. This method also caused some of the fluid to pool at the upstream end of the mandrel, this pool resulted in part of the pipe material ballooning before it reached the mandrel, these ballooned portions would expand at a faster rate causing the profile of the pipe to be deformed, resulting in the final pipe have a sausage-like shape due to the irregular expansion rate, as with other deformities this would reduce the structural integrity of the pipe.

However, in the presented system the fluid flows upstream allowing the fluid to be spread evenly over the entire surface of the mandrel 40. Additionally, a second set of apertures may be positioned on the surface of the mandrel 40, or the tie bar 30 to collect the injected fluid. These collecting apertures would feed the fluid to a second channel 36 within the tie bar 30 where the fluid could then be transported to a heating system to be heated and recirculated, thus obviating the need for disposal of the first fluid or drying of the end product, the product is a polymeric pipe. These second apertures would be positioned upstream from the injecting apertures and would help prevent the fluid from pooling at the upstream end of the mandrel 40. It is also noted that as the fluid flows counter-current to the direction of travel of the pipe material, the contact friction between the pipe material and the fluid would increase. This increased contact friction helps to force the pipe material towards the mandrel 40 as it travels, keeping the material snug to the mandrel 40 and reducing the risk of the pipe material becoming loose as it travels over the mandrel 40. Using this method, the mandrel 40 can have a steeper slope without the risk of the pipe material deforming, thereby allowing the system to use shorter mandrels to achieve the same pipe dimensions, reducing the overall size of the system 10 allowing the system to be incorporated into a wider range of industrial systems.

After the pipe material has expanded it runs off the mandrel 40 as it is pulled downstream into the cooling system, as mentioned this system is configured to cool the pipe material below the orientation temperature to help 'freeze' the material's molecules into place. In the system of Fig.1, the cooling system comprises only a simple cooling chamber, wherein the chamber comprises the space formed between the downstream end of the mandrel 40, a sealing member 60 positioned downstream from the mandrel 40, and the pipe material in between the mandrel 40 and the sealing member 60. In the present example, it is noted that the tie bar 30 passes through the middle of the cooling chamber 50, and would be able to inject a second fluid at a temperature below that of the first fluid into the chamber 50, wherein the fluid would help to cool the surface of the pipe material before it moves downstream to be further processed. It is noted that both the sealing member 60 and the tie bar 30 may comprise a pressure regulator 52,62, for controlling the pressure of the fluid within the cooling chamber 50. The first regulator 52 is configured to limit the amount of fluid being injected into the chamber 50 from the tie bar 30, while the second regulator 62, which would be coupled to the sealing member 60, and is configured to controllably release the fluid within the cooling chamber 50 to maintain the desired pressure.

In the preferred embodiment, the second fluid used by the cooling system consists of air. One of the benefits of using air as the second fluid is that the pressure within the cooling chamber 50 can be more easily controlled as a gaseous fluid would fill the chamber evenly resulting in a consistent pressure throughout the chamber, while a liquid may pool towards the bottom of the chamber, resulting in pressure differences within the cooling chamber 50, which may result in different cooling rates at different points of the chamber 50. This may lead to inconsistencies in the temperature of the pipe material, which may cause deformation as the colder portions would begin to shrink and may deform, or stretch, and the warmer portions of the pipe's surface as the pipe cools. Another benefit of using air in the cooling chamber 50 is that there is no need to have a system for collecting the fluid from the chamber 50, instead the sealing member 60, or the pressure regulator 62 within the sealing member 60, can be used to release the fluid from the cooling chamber 50 into the surroundings with no risk of damage to the system 10 or the system's surroundings. Further, if the air leaks out of the cooling chamber 50 there is no need to clear the spilled fluid, as the released air poses no hazard to any person near the system, and there would be no risk of damage to the rest of the system. This may allow the system 10 to remain operational even if there is a small leak from the cooling chamber 50, without the need to halt the whole system.

It is also noted that in the preferable embodiment, the first fluid used by the mandrel 40 would preferably be water. Though water could cause some risk if it was to leak from the system due to creating puddles which are potential slip hazards, also the fact that water could short circuit nearby electrical systems, it is still safer than some other fluids. Additionally, water has a higher heat capacity compared to air and other fluids, allowing heat to be transfer transferred to the pipe material at a faster rate when compared to using air, and allowing the fluid to transfer more heat at a lower pressure. Further, a volume of water may provide additional radial force to the pipe material when compared to the same volume of air, thereby allowing the first fluid to be used to increase the expansion of the pipe when necessary, this can be achieved by injecting more fluid into the space between the pipe material and the mandrel 40, to increase the fluid's pressure. In the case of the preferred embodiment, the water used for the first fluid would be heated to a temperature within the range of 98 to 102°C, as this range of temperatures would be sufficiently warm to bring most materials to their orientation temperature when used. Though the improved heat transfer rate and increased force would be true for almost all liquid fluids, water is the most preferable option due to its abundance and the relatively low risk of harm to the system 10 and persons near the system if the fluid should leak.

It is also noted that in some systems a portion of the air injected into the cooling chamber 50 may be directed towards the mandrel 40, specifically at the upstream end of the cooling chamber 50 some of the air within the chamber may be used to dry the pipe material before it enters the cooling chamber 50. This may be achieved by using vents within the upstream wall of the cooling chamber, either in a sealing member, a frame, or the rear face of the mandrel 40 to direct the air upstream and toward the pipe material. The purpose of this airflow is to remove any droplets or residue of the first fluid that may still be on the pipe material surface as it enters the cooling chamber 50. The presence of such droplets, while the pipe material is cooling, may result in a temperature gradient forming over the surface of the pipe material, due to the different cooling rates between the areas with and without the droplets. These temperature gradients could result in inconsistencies within the temperature across the pipe material, which may result in the molecules at the points where temperature differences are becoming miss-aligned, as the warmer particles move out of orientation with the colder ones, thereby producing weak points within the surface of the pipe. So, by removing the droplets, before the pipe material is cooled the risk of such weak points forming is removed.

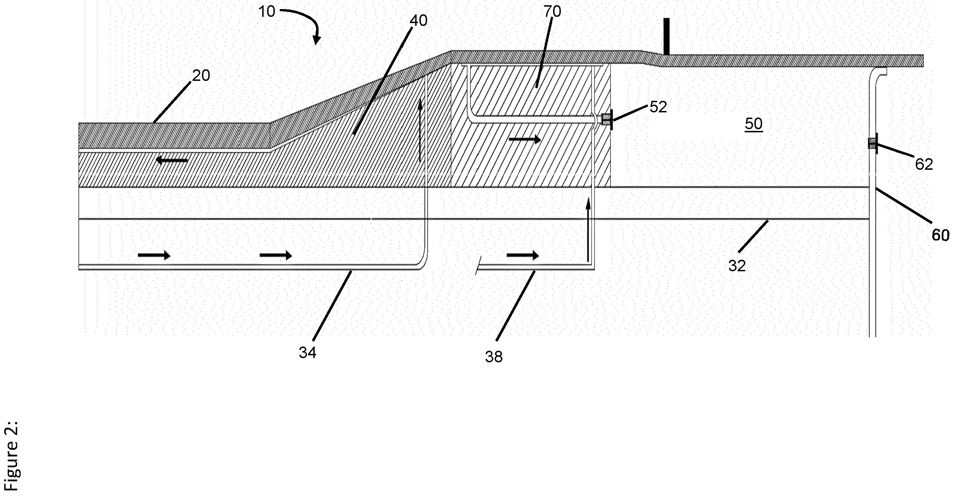

Figure 2 depicts the same expansion system 10 described above with the addition of a cooling cylinder centered on the tie bar 30 and positioned between the mandrel 40 and the cooling chamber 50. This cylinder would extend downstream from the rear face of the mandrel 40 and is therefore referred to as the cylindrical portion 70, as opposed to the conical portion of the mandrel 40 used for the expansion process as described above. This cylinder portion 70 acts as a further cooling system wherein the cylinder portion 70 is positioned within the pipe material and can be used to prevent the shrinking that occurs as the pipe material cools before the molecules can freeze into place, with the body of the cylinder holding the pipe material in shape as at least the inside of the pipe is frozen in place. Therefore, the inclusion of such a cylinder portion 70 can help remove the shrinking effect by providing a framework that retains the dimensions of the pipe until sufficient cooling has occurred to at least freeze the molecules on the pipe's inner surface into place, thereby ensuring the pipe does not shrink as it cools in the cooling chamber 50. It is noted that the achieve this effect the radius of the cylinder 70 should be approximately equal to the desired radius of the pipe material, which may be equal to, or slightly smaller than the maximum radius of the conical mandrel 40. There may be a slight difference between the size of the mandrel 40 and the cylindrical portion 70 as there may still be some shrinking of the pipe material as it cools even with the cylinder present, therefore the mandrel 40 may be configured to expand the pipe to a size slightly above the desired dimensions to accommodate for this shrinking effect.

The cylindrical portion 70 would also function in a similar method to the mandrel 40, wherein the pipe material is pulled over the surface of the cylinder portion 70, while fluid is injected between the surface of the cylinder 70 and the pipe material in order to help lubricate the pipe material and to help improve the cooling of the material as it passes over the cylinder 70. As with the mandrel 40, the fluid used by the cylinder would be transported through the system using a channel within the tie bar 30, which would then be coupled to apertures on the surface of the cylinder 70 to inject the fluid into the space between the cylinder 70 and the pipe material. There may then be a second set of apertures to collect the fluid to return the fluid to a channel within the tie bar 30 for recirculation. It is preferable for the second set of apertures to be positioned upstream relative to the injecting apertures so that the fluid flows upstream across the surface of the cylinder 70. As with the mandrel 40, the flow of the fluid would be counter-current to the direction of motion of the pipe material, thereby increasing the contact friction between the cylinder and the pipe material to prevent the risk of the pipe material deforming as it moves over the cylindrical portion 70 as described above. It is also noted that the counter-current flow over the cylinder may also help to remove droplets of the first fluid from the mandrel 40 still present on the pipe material. The direction of the second fluid flow would push such droplets upstream, where they may be collected by the second set of apertures. It should be noted that the channels from the second set of apertures may include filters or vents that may separate the collected droplets from the second fluid, which consists of air, before recirculating the second fluid.

It is preferable the fluid passing over the cylinder portion 70 is at a temperature below the orientation temperature of the pipe material to freeze the pipe material molecules in place. For this reason, there may be an insulating layer positioned between the mandrel 40 and the cylinder portion 70 to help prevent heat exchange between the conical mandrel 40 and the cylinder portion 70, and between the fluids flowing over the surface of each. This insulating layer may be made from any suitable insulating material, such as polystyrene or PTFE, but would preferably be an impermeable material to prevent any fluid flowing from the mandrel 40 to the cylinder portion 70 or vice versa.

In some cases, this fluid used by the cylinder 70 may be a different fluid from the first and second fluid described above, as the system may use a fluid colder than that of the cooling chamber to ensure a faster cooling rate as the pipe material travels over the cylinder allowing the use of smaller cylinders. However, this would require additional fluid channels within the tie bar 30, which in turn would increase the size of the tie bar 30 which reduces the range of pipe sizes the system 10 can produce, by increasing the minimum size the system 10 can produce, it would also increase the complexity of the system as additional systems would need to cool, transport and recirculate this third fluid. Therefore, as shown in the depicted example, it is preferable to use the same fluid for both the cooling chamber 50 and the cylindrical portion 70. This is achieved by first injecting the second fluid into the cylindrical portion 70 as described above. Then the collecting apertures of the cylinder portion 70 direct the second fluid to the cooling chamber 50 via channels coupling the apertures to the first pressure regulator 52, wherein the regulator 52 may be coupled to the tie bar 30 within the cooling chamber 50 or the rear face of the cylindrical portion 70 which now forms the upstream end of the cooling chamber 50. Once injected into the cooling chamber 50 the fluid can be stored to further cool the pipe material, or released from the system 10 via the second pressure regulator 62 in the downstream sealing member 60.

In the present invention one or more of the cooling fluids, used by the cylindrical portion 70 and cooling chamber 50, maybe a gas, in particular air preferably. In this respect, it is further preferable that the gas is provided at a humidity in the range of 20 to 90%. More preferably from 30 to 70%. This is not normal in the industry as there is typically dried so that on compression for delivery water residues do not accumulate, such as in a compressor holding tank. However, in the present invention providing a humidified gas greatly increases the thermal capacity of the cooling fluid, and as such not only does this mean that less gas is required for a given cooling by removing heat, but that high gas flow rates and pressures that may be required to simply provide the desired heat removal can be avoided. Control of the apparatus during operation and focus on optimal levels of lubrication and maintenance of the correct pipe dimensions and therefore more readily optimized. Similarly using humidified gas means that the temperature differential between the coolant and the surface to be cooled can be lower for a given flow rate and therefore pressure differentials between the inlet and output of fluid onto the cooling surface can be minimized to give more even pressure control over a given length of the apparatus. This enables better control and hence more uniform pipe dimensions to be achieved.

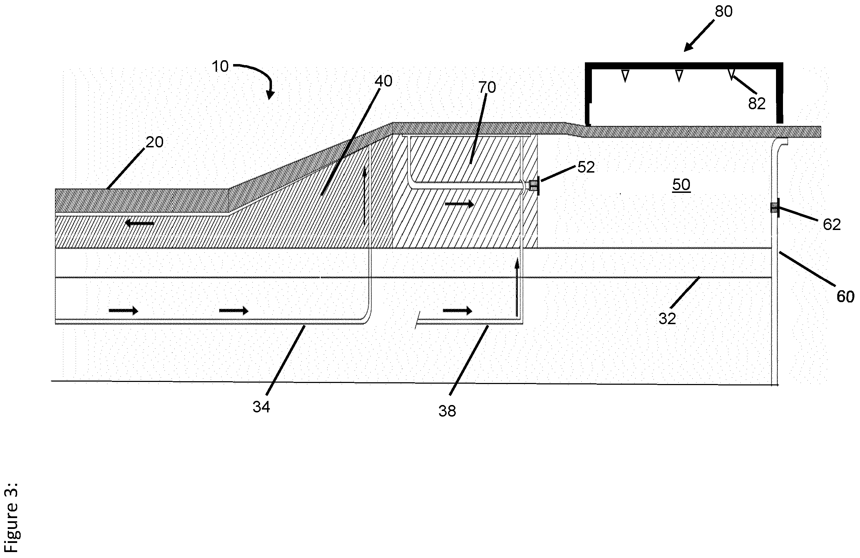

Figure 3 depicts another possible addition to the cooling system, specifically a housing 80 that would surround the above-mentioned cooling chamber 50, wherein the housing may contain features that can apply additional cooling to the pipe material or apply an additional radial force to expand or maintain the shape of the pipe material. In some cases, the housing 80 would include one or more valves configured to form a partial vacuum within the housing 80. This vacuum may be used to produce an outward radial force on the pipe material within the housing 80, as the vacuum would result in the force caused by the fluid within the cooling chamber 50 is increased without increasing the pressure, or volume of the fluid inside the pipe material. This way the housing 80 can produce a sufficient force that can be used to expand the pipe material in the housing 80 or to maintain the dimensions of the pipe as it cools.

In some cases, the housing 80 may also include a plurality of nozzles 82 for spraying a cooling fluid onto the outer surface of the pipe material. By spraying the fluid onto the outside of the pipe material the system can reduce the risk of a temperature gradient forming through the pipe material, this is to say the system can ensure that both sides of the pipe material are sufficiently cooled before the material leaves the cooling chamber 50. If not, the pipe material may have cooled on the inside while still being heated on the outside, this could result in the heated material becoming unaligned as the molecules would not be frozen in the biaxial orientation resulting in the outer surface of the pipe being weaker, it may also result in the pipe material being stretched as it is pulled through the chamber depending on which surface of the pipe is being pulled as the warmer side may still be soft and could deform if used to pull the pipe out of the cooling chamber. This could result in weak points forming within the pipe as a temperature gradient across the thickness of the pipe material may result in the hotter portions of the pipe material freezing when the molecules of the material are not aligned, which may compromise the structural integrity of the pipe when in use. it is noted that such housing would also require a pressure regulator, or valve for collecting the used cooling fluid, and removing the fluid from the housing so that it may be disposed of, or recirculated back into the system.

In some cases, the housing 80 may utilize both the partial vacuum and the cooling fluid nozzles 82. In such cases, the vacuum may help to increase the efficiency of the housing's cooling system, as the vacuum would allow the cooling fluid to evaporate at a faster rate, and thereby increase the cooling rate of the pipe material within the housing 80. It is also noted that when using a partial vacuum, the cooling fluid used in the housing can include gases, such as air, and still be effective. As previously mentioned, the preferred cooling fluid for the cooling chamber 50 is air, due to the low risks should the fluid leak, and can be disposed of by simply releasing it from the system 10 into the surroundings. Likewise, air could be used for cooling the outer surface of the pipe material in the same manner, additionally, the vacuum would allow the air to transport heat from the pipe material more efficiently. Another benefit of using air in the cooling chamber housing 80 is that the same source of pressurized air used for supplying the cooling chamber 50 could be used for the housing, thereby simplifying the overall system, and there would be no need for a system to collect and recirculate the used fluid as the housing 80 could comprise a third pressure regulator, or similar apparatus, for controllably releasing the used air into the system surrounding, with no risk of harm to the system or its surroundings. Thereby further reducing the number of parts needed in the system allowing the size of the overall system to be reduced. However, in such a system the cooling fluid nozzles 82 would need to be placed close to the pipe material to ensure the injected air makes contact with the pipe material before it leaves the housing 80. Alternatively, the used water from the mandrel 40, or cooled water could also be used as the vacuum would result in the water rapidly turning into vapor once inside the housing, this evaporation would transfer more heat from the pipe material and therefore may be preferable over air, however, the nozzles 82 would again need to be positioned near the pipe material to ensure the water reaches the pipe material before evaporating. Therefore, it is preferable to use the features of the partial vacuum and the cooling fluid nozzles 82 within the housing 80 together.

In some cases, the expansion and cooling portions of the system may further comprise a means of monitoring the size of the pipe the system is producing. This monitoring system would comprise one or more sensors coupled to the system 10, wherein the sensors are configured to monitor the dimensions of the pipe material at certain points of the system 10. These measurements could then be compared to predetermined values to ensure the size of the pipe being formed is at the desired value, or within an acceptable range. These sensors may include a contact sensor configured to monitor the friction force applied to the sensor by the moving pipe material, with the sensors positioned where the edge of the pipe would be if the pipe is at the desired size if there are no readings from the sensor the pipe is too small and if the reading extends beyond a threshold value it may indicate the pipe is too wide resulting in more friction between the material and the sensor. Alternatively, the sensor may comprise one or more sensors with a respective signal generator, such as a laser, pulse generator, or radioactive source, wherein the sensors are configured to read the signal that travels through the pipe material or the time to reflect the signal off of the pipe material, to determine the size of the pipe instead.

The monitoring system may further comprise a controller, and may also include a sizing device. Wherein the controller can use the reading of the sensors to determine if the size of the pipe is correct and is configured to actuate the system 10 and/or sizing device to correct the size of the pipe if it falls outside of the acceptable range. One method for correcting the size of the pipe would be for the controller to actuate the sizing device, where the sizing device comprises a frame or similar structure positioned around, and sometimes within the pipe material, and when actuated would move towards or away from the centre of the pipe to apply force to the pipe material to constrict or expand the pipe material to the desired size. It is noted that such a device would preferably be positioned between the mandrel 40 and the cooling system, so that the pipe material would still be heated and therefore more flexible, to prevent damage to the pipe material. Such a device may include rollers on its surface to reduce the friction generated by the moving pipe material to further reduce the risk of damaging the pipe material. It is noted that this device may include a friction sensor as described above to provide feedback to the controller and help determine the size of the pipe material within the sizing device.

The controller may also comprise one or more pressure sensors to monitor and control the pressure of the fluids within the system 10, such as the first fluid used by the mandrel 40 and the second fluid used by the cooling system. Wherein the controller may compare the pressure reading to one or more thresholds to ensure the pressure is at a desired value, to create the desired radial force on the pipe material as it passes through the system 10. The controller may be configured to adjust the pressure of a fluid within the system by actuating the apertures within the tie bar 30, mandrel 40, and/or cooling system, to increase or decrease the amount of fluid injected into the system, and/or increase or decrease the amount of fluid being collected from the system, to adjust the pressure of the fluid within the pipe material to increase or decrease the force applied to the pipe material by each fluid in the system. It is noted that the controller may use the fluid pressure to adjust the size of the pipe material when it is determined that the pipe material does not have the desired dimensions. Wherein the controller may increase the pressure of the fluid over the mandrel 40 or within the cooling chamber 50 to further expand the pipe material, or reduce the pressure of the fluid over the mandrel 40 or within the cooling chamber 50 to reduce the size of the pipe material. Alternatively, the controller may calculate the pressure needed to form a pipe with the desired dimensions based on the material chosen, using the pressure sensor reading to ensure the pressure in the system is at the required value, without the need for the sizing device readings. Note this controller would also be configured to control the pressure regulators 52,62 of the cooling chamber 50, so that the controller may adjust the setting of the regulators 52,62, and in turn control the pressure of the fluid inside the cooling chamber 50 by adjusting the amount of fluid being injected by the first pressure regulator 52, and/or the amount of fluid being released by the second pressure regulator 60, to keep the pressure inside the chamber at a required value to correct or maintain the pipes shape as the pipe material cools. It is also noted that the controller may be able to release all of the fluid within the cooling chamber 50 by actuating the sealing member 60, thereby deforming the member 60 and allowing fluid within the cooling chamber 50 to escape, if the flow from the second regular 62 is insufficient to bring down the pressure within the cooling chamber 50 to the desired value.

The controller may also be configured to monitor the fluid within the channels of the tie bar 30, this may be achieved using pressure sensors or flow meters to ensure there is sufficient fluid within each of the channels 34,36,38. The controller may also be configured to control the fluid sources to adjust the flow of fluid into each channel, for example, the controller may increase the amount of pressurized air flowing into the tie bar 30 when the amount of fluid within the cooling chamber 50 needs to increase.

Another key aspect of this invention is the arrangement of the channels 34,36,38 within the tie bar shell 32. The size and arrangement of these channels determine the minimum size of the tie bar shell 32 and in turn, the minimum size of pipe the system can produce, as the smallest pipe would have a diameter equal to that of the tie bar 32 the material is pulled by. Therefore, it is preferable to have a tie bar 32 with as small a radius as possible.

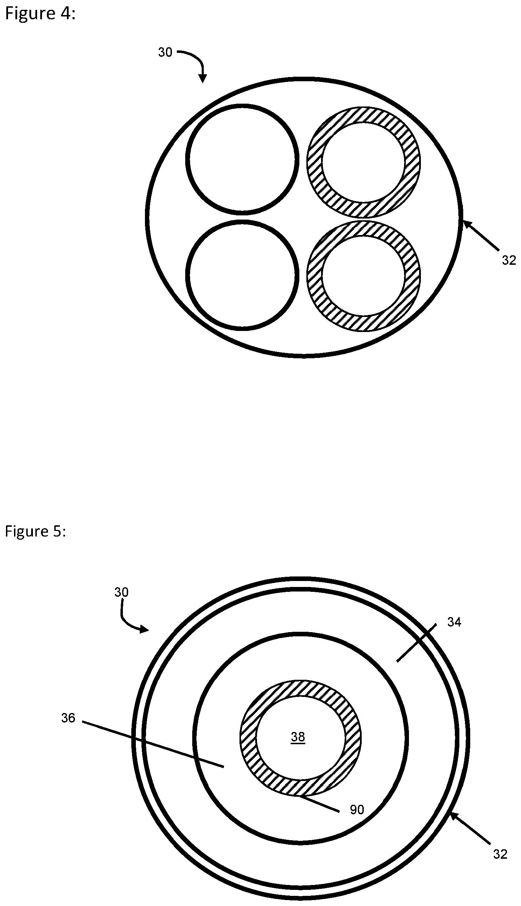

Figure 4 depicts an example of a current used tie bar channel arrangement. In this arrangement the tie bar shell 32 contains four channels, these channels comprise an input channel for bringing fluid to parts of the system from a source, and an output channel for bringing the used fluid back to a source for recirculation, for each of the two fluids used by the system, these fluids comprising the heated fluid for the mandrel 40 and a cooling fluid for the cooling system. It is noted that these four channels are arranged to form a quadrilateral with one channel on each corner, an alternative arrangement may have one channel positioned in the centre surrounded by the other three channels. In either case, it is noted that there are four separate channels within the shell 32 and that the minimum size of the tie bar 30 would be determined based on the size and arrangement of these four channels.

Further, in the depicted example two of the tie bar channels are surrounded by an insulating layer. As previously stated, the tie bar channels would need to circulate both a heated fluid and a cooling fluid, to ensure that each of these fluids remains at the desired temperature for their uses within the expansion system, it is preferable that there is little to no heat exchange between these fluids as they travel through the tie bar 30. In the depicted example there are two channels with insulating layers, as this is the minimum required to prevent unwanted heat exchange. In some cases, the two insulating layers may be on the pipes for the cooling fluid, or the pipes of the hot fluid, thereby preventing heat exchange between the fluids as they flow through the tie bar 30, by thermally isolating one of the fluids. In other cases, these insulating layers may be applied to the input channels. As the fluid within the returned channels does not need to be at a specific temperature, as this fluid has already been used for its purpose within the expanding system 10, and would now be recirculated, which would include sending the fluid to an external system, such as a heater or cooler, to have the fluid brought back to the desired temperature for use in the system before being injected back into the input channels. When using such a method there is no need to protect the output channels from heat exchange per. And though it is limited, the amount of heat loss/gained by the fluid in these channels could reduce the time and energy required to bring the fluid back to temperature before recirculating. In other cases, instead of having insulating layers applied to all of the channels or specific channels, the insulation within the tie bar may be in the form of a foam or liquid, that can be injected into the space between the channels, however, such insulation may require a certain thickness to be effective and therefore may require more volume when compared to the individual insulating layers. The insulation may be a PTFE layer as this provides both low friction for improved flow and resistance to blockage along with good thermal insulation. The insulation is preferably on the high temperature side of the channel for reduced heat transfer.

The present invention seeks to improve upon the tie bar arrangement set out in Fig.3 by using a different arrangement to reduce the size of the tie bar 30, and in turn create a system that can produce a wider range of pipe sizes, as the minimum size is determined from the size of the tie bar 30. An example of this improved tie bar arrangement can be seen in figure 4.

In the improved arrangement there are only three channels 34,36,38 arranged concentrically within the tie bar shell 32 thereby removing the need for any space between channels 34,36,38 or the shell 32. In this arrangement there are only three channels because, as previously mentioned, the preferred fluid used for the cooling system is simply air which can then be released from the system after use, rather than recirculating, thereby removing the need for a cooling fluid output channel. The first or outer channel 34 is used to inject the first fluid into the mandrel 40, the second or middle channel 36 is used to collect the first fluid from the mandrel 40 so that it can be heated and recirculated, and the third or inner channel 38 is used to inject the second fluid into the cooling chamber 50, or the cylinder portion 70 if present.

By having the concentric arrangement, the tie bar 30 can eliminate the gaps between the channels shown in fig.3, thereby reducing the overall volume of the tie bar 30. Additionally, the only channel that would require insulating in this arrangement is the third channel 38, as the first fluid within the first and second channels 34,36 would have similar temperatures and therefore the heat exchange between the first and second channels 34,36 would be minimum, though in some cases the user may have the second channel 36 insulated as well to eliminate any heat exchange between the channels. However, it is preferable for only the third channel 38 to include an insulating layer 90, as the third channel 38 is the channel with the smallest surface area and therefore would require a smaller insulating layer, compared to the other channels, and therefore would take up less volume within the tie bar 30 with insulation, when compared to insulating the other channels. In cases where one or more channels include an insulating layer 90, it is preferable that the layer 90 is as thin as possible and would preferably be placed on the smaller inner channels, as these channels would have a smaller surface area to cover and so a smaller volume of insulation would be required. It is noted that the preferred form of insulation would be a layer of PTFE, and it may be preferable to place the layer on the inside of the chosen channels, as the surface area of the inner surface would be smaller than the outer surface of each channel.

As noted in the preferred embodiment of the system, the first fluid would comprise heated water that would be at a pressure of 1-2bar within the tie bar 30, and the second fluid would comprise air at a pressure of 10bar within the tie bar 30. When using these pressures for the fluid within channels 34,36,38, it is clear that the walls between the first and second channels 34,36 can be relatively thin, as the pressure on both sides of the wall should be the same. Though the third channel 38 would require a thicker wall due to the higher pressure of the fluid within the channel compared to the surrounding fluid in the second channel 36, though because the fluid is air, the volume of the third channel 38 can be relatively small while still supplying sufficient fluid to the system, thereby having a smaller channel when compared to a system that uses water, or another liquid for the second fluid, despite the need for a higher pressure for sufficient heat exchange to occur, and therefore needing a thicker wall on the third channel 38.

Therefore, by using a tie bar 30 with concentric channels the size of the tie bar 30 can be reduced. Further, the preferred embodiment uses a smaller third channel 38 and a thinner wall between the first and second channels to reduce the overall size of the concentric channels and in turn reduce the overall volume of the tie bar 30. It is noted that the tie bar 30 depicted in Fig.3 usually has a minimum radius of 36mm, whereas the concentric arrangement may reduce this minimum radius to 24mm. with such a reduction in the tie bar's size, the new arrangement can be used to produce a wider range of pipes using the method described above as it would be able to produce smaller sizes that are not possible with current tie bars.

By using the combination of features described above the present invention provides an improved system 10 for the biaxial expansion of polymeric pipe. As the presented system removes the need to recirculate the fluid used in the cooling chamber 50, utilizes counter-current flow to increase friction with the pipe material and the mandrel 40 so that a smaller mandrel 40 can be used in the system. Both of these features reduce the size of the expansion system allowing the system to be used in a wider range of industrial settings as the system can fit into smaller spaces. These features in addition to the cooling cylinder 70 and housing 80 can be used to ensure the pipe produced have the desired dimensions and reduces the risks of producing deformities in the pipe surface by using the methods described above. Further the tie bar 30 can be improved by using concentric channels to reduce the tie bars size and thereby increase the range of pipe sizes the system can produce.

## Claims

1. A system (10) for biaxial expansion of polymeric pipe (20), the system comprising:
an elongate former over which polymeric pipe (20) to be radially expanded is passed lengthwise, that is, the system is configured to convey the polymeric pipe (20) over the former at elevated temperature, such that the polymeric pipe (20) is rendered plastic and biaxially, so radially and axially, deformable,
the former comprises axially, so lengthwise, the sequentially connected sections of a tie bar (30); a mandrel (40); and a cooling section, that sequence defining a downstream direction for pipe travel and specifically wherein;
the cooling section comprises:
a cooling chamber (50)
and
wherein the cooling chamber (50) is downstream from the mandrel (40) and configured to receive the polymeric pipe material from the mandrel (40), wherein the cooling chamber is defined upstream by the mandrel (40) and downstream by a downstream sealing member (60) and axially by, in use, the polymeric pipe material from the mandrel (40), wherein;
the cooling chamber is configured to receive a volume of a fluid, termed a second fluid, consisting of gas, preferably air, from a channel (38) within the tie bar (30), via a first pressure regulator (52), and the downstream sealing member (60) comprises a second pressure regulator (62) for releasing the second fluid downstream from the cooling section and wherein the cooling section comprises no means for returning the second fluid for transport upstream by the tie bar (30).

2. The system (10) of claim 1 wherein the cooling section further comprises a cylindrical portion (70), positioned between the mandrel (40) and the cooling chamber (50), the cylindrical portion (70) comprising;
a cylinder that extends downstream from the rear face of the mandrel (40), wherein the diameter of the cylindrical portion is no more than the maximum diameter of the mandrel;
the cylindrical portion (70) further comprises a plurality of surface apertures configured for injecting the second fluid, consisting of gas transported from the tie bar (30), for lubricating the cylindrical portion (70), and further apertures for collecting the second fluid, wherein the apertures for injecting the fluid from the third channel (38) of the tie bar (30), are positioned downstream from the apertures configured to collect the second fluid from the mandrel (40).

3. The system (10) of the preceding claim wherein the second fluid flow s countercurrent to the direction of the motion of the pipe material.

4. The system (10) of any preceding claim, wherein the
tie bar (30) comprises
an outer shell (32), over which the pipe is configured to pass and within the shell (32), a plurality of channels are disposed for transporting fluids to and from the tie bar (30) itself, or to the mandrel (40), or to the cooling section and
wherein the plurality of channels comprises;
a first input channel configured to transport a first fluid from a first channel (34) in the tie bar (30) to the mandrel (40),
a second fluid channel configured to transport the first fluid from the mandrel (40) back to a second channel (36) in the tie bar (30), such as for recirculation; and
a third fluid input channel configured to transport the second fluid from a third channel (38) in the tie bar (40) to the cooling section.

5. The system (10) of any preceding claim, wherein the
the mandrel (40) for radial expansion of the pipe comprises:
a frustoconical portion comprising; one or more sections, wherein each section when sloped has its narrower end proximate to the tie bar (30) and arranged so that the diameter of the conical portion of the mandrel increases as the mandrel (40) extends downstream;
the frustoconical portion optionally further comprising;
a plurality of apertures on the surface of the mandrel (40) for injecting the first fluid,
transported by the tie bar (30), for lubricating passage of pipe (20) over the conical portion of the mandrel, and
apertures located on the surface of the mandrel for collecting the injected first fluid from the mandrel (40) for recirculation, and wherein such aperture for injecting the first fluid is positioned axially downstream from the apertures configured to collect the first fluid for returning the first fluid for transport upstream by the tie bar (30).

6. The system (10) of any preceding claim wherein the mandrel (40) and/or cooling chamber (50) comprises one or more pressure sensors configured to determine the pressure of the fluid inside the pipe material.

7. The system (10) of claims 4 to 6 wherein the system controller is configured to analyze the readings from the pressure sensors and when the pressure of the fluid is beyond the desired value the controller is configured to:
a) increase the amount of fluid injected into the system;
b) open or close the collection apertures in the mandrel (40), the cylindrical portion (70), or the tie bar (30);
c) open or close the injection apertures in the mandrel (40) and/or cylindrical portion (70);
d) adjust the pressure regulators (52,62) of the cooling chamber (50);
to bring the fluid pressure of at least one of the frustoconical portion of the mandrel (40), the cylindrical portion (70), and/or the cooling chamber (50) back to the desired value.

8. The system (10) of any preceding claim, wherein the channels (34,36,38) within the tie bar (30) are concentric.

9. A method of using the system of any of claims 1 to 8, the method comprising:
screw injecting a heated pipe material into a die on the upstream end of the tie bar (30);
impacting the pipe material onto a die head of the die, to shape the pipe material into a hollow cylinder around the tie bar (30);
pulling the pipe material along the tie bar (30) toward the upstream end of a conical portion of a mandrel (40), wherein the pipe material is pulled over the surface of the conical portion of the mandrel (40) to expand the wall of the pipe material cylinder;
pulling the pipe material from the mandrel (40) and inserting the pipe material into a cooling chamber (50);
wherein the cooling chamber (50) receives a volume of a second fluid from the tie bar (30) that is injected into a space limited by the inside the pipe material, the mandrel (40), and the downstream sealing member (60) of the cooling chamber (50), via an upstream pressure regulator (52) of the cooling chamber (50); wherein the second fluid can be controllably released from the space via a downstream pressure regulator (62) of the cooling chamber (50); and
pulling the formed pipe from the downstream end of the cooling chamber (50).

10. The method of claim 9, wherein when the cooling system comprises a cylindrical portion (70), the method further comprises the step of:
pulling the pipe material over the surface of a cylindrical portion (70) that extends downstream from the mandrel (40);
injecting the second fluid from a third channel (38) within the tie bar (30) through a plurality of apertures in the surface of the cylindrical portion (70), between the surface of the cylindrical portion (70) and the pipe material, with the second fluid flowing in the upstream direction;
collecting the second fluid in a plurality of apertures positioned upstream from the injecting apertures on the surface of the cylindrical portion (70) near the upstream end of the cylindrical portion;
injecting the collected second fluid into the cooling chamber (50) via a channel connecting the plurality of collecting apertures to the first pressure regulator (51) of the cooling chamber (50).

11. The method of claims 9 or 10, further comprising injecting a first fluid from a channel (34) within the tie bar (30) through a plurality of apertures in the surface of the conical portion of the mandrel (40), between the mandrel (40) and the pipe material, with the first fluid flowing over the mandrel (40) in the upstream direction;
collecting the first fluid in a plurality of apertures positioned upstream from the injecting apertures on the surface of the mandrel (40) or the tie bar (30) to return the first fluid to a second channel (36) of the tie bar (30);

12. The method of any of claims 9 to 11, wherein the system comprises one or more pressure sensors, the method further comprises:
analyzing the readings from the pressure sensors, comparing the values to a predetermined desired pressure value;
on determining the pressure is beyond the desired value, adjust the pressure value back to the desired value by performing one or more of the following;
a) increase the amount of fluid injected into the system;
b) open or close the collection apertures in the mandrel (40), the cylindrical portion (70), or the tie bar (30);
c) open or close the injection apertures in the mandrel (40) and/or cylindrical portion (70);
d) adjust the pressure regulators (52,62) of the cooling chamber (50).

13. The method of any of claims 9 to 12, wherein the system comprises one or more sizing devices with a respective sensor for determining the size of the pipe material, the method further comprises:
analyzing the data from the sensors;
on determining the size of the pipe material is outside a desired range, adjusting the sizing device to reshape the pipe to the desired size; or
performing one of the following steps of:
a) increase the amount of fluid injected into the system;
b) open or close the collection apertures in the mandrel (40), the cylindrical portion (70), or the tie bar (30);
c) open or close the injection apertures in the mandrel (40) and/or cylindrical portion (70);
d) adjust the pressure regulators (52,62) of the cooling chamber (50);
to adjust the pressure within the pipe material to reshape the pipe material to be within the desired size range.

14. The method of any of claims 9 to 13, further comprising the cooling chamber housing (80) spraying cooling fluid onto the outer surface of the pipe material inside the cooling chamber (50).

15. The method of any of claims 9 to 14, further comprises the cooling chamber housing (80) forming a partial vacuum between the housing (80) and the pipe material inside the cooling chamber (50).

## Patentansprüche

1. Ein System (10) zur biaxialen Expansion eines polymeren Rohres (20), wobei das System umfasst:
eine längliche Formvorrichtung, über die das radial auszudehnende polymere Rohr (20) in Längsrichtung geführt wird, das heißt, das System ist konfiguriert, um das polymere Rohr (20) bei erhöhter Temperatur über die Formvorrichtung zu befördern, so dass das polymere Rohr (20) plastisch und biaxial, also radial und axial, deformierbar wird,
wobei die Formvorrichtung axial, also in Längsrichtung, die sequenziell verbundenen Abschnitte einer Zugstange (30), eines Dorns (40) und eines Kühlabschnitts umfasst, wobei diese Sequenz eine Stromabwärtsrichtung für den Rohrtransport definiert und insbesondere wobei;
der Kühlabschnitt umfasst:
eine Kühlkammer (50)
und
wobei die Kühlkammer (50) stromabwärts vom Dorn (40) liegt und konfiguriert ist, um das polymere Rohrmaterial vom Dorn (40) aufzunehmen, wobei die Kühlkammer stromaufwärts durch den Dorn (40) und stromabwärts durch ein stromabwärts gelegenes Dichtungselement (60) und axial, während der Verwendung, durch das polymere Rohrmaterial vom Dorn (40) definiert ist, wobei;
die Kühlkammer konfiguriert ist, um ein Volumen eines Fluids, das als zweites Fluid bezeichnet wird und aus Gas, bevorzugt Luft, besteht, aus einem Kanal (38) innerhalb der Zugstange (30) über einen ersten Druckregler (52) aufzunehmen, und das stromabwärts gelegene Dichtungselement (60) einen zweiten Druckregler (62) zum Abgeben des zweiten Fluids stromabwärts vom Kühlabschnitt umfasst, und wobei der Kühlabschnitt keine Mittel zum Zurückführen des zweiten Fluids zum stromaufwärts Transport durch die Zugstange (30) umfasst.

2. Das System (10) nach Anspruch 1, wobei der Kühlabschnitt weiter einen zylindrischen Bereich (70) umfasst, der zwischen dem Dorn (40) und der Kühlkammer (50) positioniert ist, wobei der zylindrische Bereich (70) umfasst:
einen Zylinder, der sich von der Rückseite des Dorns (40) stromabwärts erstreckt, wobei der Durchmesser des zylindrischen Bereichs nicht größer ist als der maximale Durchmesser des Dorns;
wobei der zylindrische Bereich (70) weiter eine Vielzahl von Oberflächenöffnungen umfasst, die zum Einspritzen des zweiten Fluids, bestehend aus von der Zugstange (30) transportiertem Gas, zum Schmieren des zylindrischen Bereichs (70), konfiguriert ist, und weiter Öffnungen zum Auffangen des zweiten Fluids umfasst, wobei die Öffnungen zum Einspritzen des Fluids aus dem dritten Kanal (38) der Zugstange (30) stromabwärts von den Öffnungen positioniert sind, die zum Auffangen des zweiten Fluids vom Dorn (40) konfiguriert sind.

3. Das System (10) nach dem vorhergehenden Anspruch, wobei das zweite Fluid entgegen der Bewegungsrichtung des Rohrmaterials strömt.

4. Das System (10) nach einem der vorhergehenden Ansprüche, wobei die Zugstange (30) umfasst:
eine Außenhülle (32), über die das Rohr zu laufen konfiguriert ist, und wobei innerhalb der Hülle (32) eine Vielzahl von Kanälen zum Transportieren von Fluiden zu und von der Zugstange (30) selbst, oder zum Dorn (40), oder zum Kühlabschnitt angeordnet sind, und
wobei die Vielzahl von Kanälen umfasst:
einen ersten Einlasskanal, der konfiguriert ist, um ein erstes Fluid von einem ersten Kanal (34) in der Zugstange (30) zum Dorn (40) zu transportieren,
einen zweiten Fluidkanal, der konfiguriert ist, um das erste Fluid vom Dorn (40) zurück zu einem zweiten Kanal (36) in der Zugstange (30), wie zur Rezirkulation, zu transportieren; und
einen dritten Fluideinlasskanal, der konfiguriert ist, um das zweite Fluid von einem dritten Kanal (38) in der Zugstange (40) zum Kühlabschnitt zu transportieren.

5. Das System (10) nach einem der vorhergehenden Ansprüche, wobei der Dorn (40) zur radialen Ausdehnung des Rohrs umfasst:
einen kegelstumpfförmigen Bereich umfassend: einen oder mehrere Abschnitte, wobei jeder Abschnitt, wenn geneigt, mit seinem schmaleren Ende in der Nähe der Zugstange (30) liegt und so angeordnet ist, dass der Durchmesser des kegelförmigen Bereichs des Dorns zunimmt, wenn sich der Dorn (40) stromabwärts erstreckt;
wobei der kegelstumpfförmige Bereich optional weiter umfasst:
eine Vielzahl von Öffnungen an der Oberfläche des Dorns (40) zum Einspritzen des ersten Fluids, das von der Zugstange (30) transportiert wird, zum Schmieren des Durchgangs des Rohrs (20) über den kegelförmigen Bereich des Dorns, und
Öffnungen, die an der Oberfläche des Dorns lokalisiert sind, zum Auffangen des eingespritzten ersten Fluids vom Dorn (40) zur Rezirkulation, und wobei eine solche Öffnung zum Einspritzen des ersten Fluids axial stromabwärts von den Öffnungen positioniert ist, die zum Auffangen des ersten Fluids konfiguriert sind, um das erste Fluid zum stromaufwärts Transport durch die Zugstange (30) zurückzuführen.

6. Das System (10) nach einem der vorhergehenden Ansprüche, wobei der Dorn (40) und/oder die Kühlkammer (50) einen oder mehrere Drucksensoren umfasst, die konfiguriert sind, um den Druck des Fluids innerhalb des Rohrmaterials zu bestimmen.

7. Das System (10) nach den Ansprüchen 4 bis 6, wobei die Systemsteuerung konfiguriert ist, um die Auslesungen der Drucksensoren zu analysieren, und wobei die Steuerung, wenn der Druck des Fluids den gewünschten Wert überschreitet, konfiguriert ist, um:
a) die Menge des in das System eingespritzten Fluids zu erhöhen;
b) die Auffangöffnungen im Dorn (40), im zylindrischen Bereich (70) oder in der Zugstange (30) zu öffnen oder zu schließen;
c) die Einspritzöffnungen im Dorn (40) und/oder im zylindrischen Bereich (70) zu öffnen oder zu schließen;
d) die Druckregler (52, 62) der Kühlkammer (50) anzupassen;
um den Fluiddruck von mindestens einem der kegelstumpfförmigen Bereiche des Dorns (40), des zylindrischen Bereichs (70) und/oder der Kühlkammer (50) wieder auf den gewünschten Wert zu bringen.

8. Das System (10) nach einem der vorhergehenden Ansprüche, wobei die Kanäle (34, 36, 38) innerhalb der Zugstange (30) konzentrisch sind.

9. Ein Verfahren zur Verwendung des Systems nach einem der Ansprüche 1 bis 8, wobei das Verfahren umfasst:
Einspritzen eines erhitzten Rohrmaterials mittels einer Schnecke in eine Düse am stromaufwärts gelegenen Ende der Zugstange (30);
Anschlagen des Rohrmaterials auf einen Düsenkopf der Düse, um das Rohrmaterial zu einem Hohlzylinder um die Zugstange (30) herum zu formen;
Ziehen des Rohrmaterials entlang der Zugstange (30) in Richtung des stromaufwärts gelegenen Endes eines kegelförmigen Bereichs eines Dorns (40), wobei das Rohrmaterial über die Oberfläche des kegelförmigen Bereichs des Dorns (40) gezogen wird, um die Wand des Rohrmaterialzylinders zu erweitern;
Ziehen des Rohrmaterials vom Dorn (40) und Einführen des Rohrmaterials in eine Kühlkammer (50);
wobei die Kühlkammer (50) ein Volumen eines zweiten Fluids von der Zugstange (30) aufnimmt, das über einen stromaufwärts gelegenen Druckregler (52) der Kühlkammer (50) in einen Raum eingespritzt wird, der durch das Innere des Rohrmaterials, den Dorn (40) und das stromabwärts gelegene Dichtungselement (60) der Kühlkammer (50) begrenzt ist; wobei das zweite Fluid über einen stromabwärts gelegenen Druckregler (62) der Kühlkammer (50) steuerbar aus dem Raum abgelassen werden kann; und
Ziehen des geformten Rohrs aus dem stromabwärts gelegenen Ende der Kühlkammer (50).

10. Das Verfahren nach Anspruch 9, wobei, wenn das Kühlsystem einen zylindrischen Bereich (70) umfasst, das Verfahren weiter den Schritt umfasst:
Ziehen des Rohrmaterials über die Oberfläche eines zylindrischen Bereichs (70), der sich stromabwärts vom Dorn (40) erstreckt;
Einspritzen des zweiten Fluids aus einem dritten Kanal (38) innerhalb der Zugstange (30) durch eine Vielzahl von Öffnungen in der Oberfläche des zylindrischen Bereichs (70), zwischen der Oberfläche des zylindrischen Bereichs (70) und dem Rohrmaterial, wobei das zweite Fluid in stromaufwärts Richtung strömt;
Auffangen des zweiten Fluids in einer Vielzahl von Öffnungen, die stromaufwärts von den Einspritzöffnungen auf der Oberfläche des zylindrischen Bereichs (70) nahe dem stromaufwärts gelegenen Ende des zylindrischen Bereichs positioniert sind;
Einspritzen des aufgefangenen zweiten Fluids in die Kühlkammer (50) über einen Kanal, der die Vielzahl von Auffangöffnungen mit dem ersten Druckregler (51) der Kühlkammer (50) verbindet.

11. Das Verfahren nach Anspruch 9 oder 10, weiter umfassend
Einspritzen eines ersten Fluids aus einem Kanal (34) innerhalb der Zugstange (30) durch eine Vielzahl von Öffnungen in der Oberfläche des kegelförmigen Bereichs des Dorns (40), zwischen dem Dorn (40) und dem Rohrmaterial, wobei das erste Fluid in stromaufwärts Richtung über den Dorn (40) strömt;
Auffangen des ersten Fluids in einer Vielzahl von Öffnungen, die stromaufwärts von den Einspritzöffnungen an der Oberfläche des Dorns (40) oder der Zugstange (30) positioniert sind, um das erste Fluid in einen zweiten Kanal (36) der Zugstange (30) zurückzuführen.

12. Das Verfahren nach einem der Ansprüche 9 bis 11, wobei das System einen oder mehrere Drucksensoren umfasst und das Verfahren weiter umfasst:
Analysieren der Auslesungen von den Drucksensoren und Vergleichen der Werte mit einem vorbestimmten gewünschten Druckwert;
beim Bestimmen, dass der Druck über dem gewünschten Wert liegt, Anpassen des Druckwerts zurück auf den gewünschten Wert durch Durchführen eines oder mehrerer der folgenden Schritte:
a) Erhöhen der Menge des in das System eingespritzten Fluids;
b) Öffnen oder Schließen der Auffangöffnungen im Dorn (40), im zylindrischen Bereich (70) oder in der Zugstange (30);
c) Öffnen oder Schließen der Einspritzöffnungen im Dorn (40) und/oder im zylindrischen Bereich (70),
d) Einstellen der Druckregler (52, 62) der Kühlkammer (50).

13. Das Verfahren nach einem der Ansprüche 9 bis 12, wobei das System eine oder mehrere Kalibriervorrichtungen mit jeweils einem Sensor zum Bestimmen der Größe des Rohrmaterials umfasst, wobei das Verfahren weiter umfasst:
Analysieren der Daten von den Sensoren;
beim Bestimmen, dass die Größe des Rohrmaterials außerhalb eines gewünschten Bereichs liegt, Anpassen der Kalibriervorrichtung, um das Rohr auf die gewünschte Größe umzuformen; oder
Durchführen eines der folgenden Schritte:
a) Erhöhen der Menge des in das System eingespritzten Fluids;
b) Öffnen oder Schließen der Auffangöffnungen im Dorn (40), im zylindrischen Bereich (70) oder in der Zugstange (30);
c) Öffnen oder Schließen der Einspritzöffnungen im Dorn (40) und/oder im zylindrischen Bereich (70);
d) Einstellen der Druckregler (52, 62) der Kühlkammer (50);
um den Druck innerhalb des Rohrmaterials anzupassen, damit das Rohrmaterial innerhalb der gewünschten Größenspanne umgeformt wird.

14. Das Verfahren nach einem der Ansprüche 9 bis 13, weiter umfassend, dass das Kühlkammergehäuse (80) Kühlfluid auf die Außenfläche des Rohrmaterials innerhalb der Kühlkammer (50) sprüht.

15. Das Verfahren nach einem der Ansprüche 9 bis 14 weiter umfassend, dass das Kühlkammergehäuse (80) ein Teilvakuum zwischen dem Gehäuse (80) und dem Rohrmaterial im Inneren der Kühlkammer (50) bildet.

## Revendications

1. Système (10) pour l'expansion biaxiale de tuyau polymère (20), le système comprenant :
un gabarit allongé sur lequel le tuyau polymère (20) devant être expansé radialement est engagé dans le sens de la longueur, c'est-à-dire que le système est configuré pour acheminer le tuyau polymère (20) sur le gabarit à une température élevée, de sorte que le tuyau polymère (20) devienne plastique et déformable de manière biaxiale, c'est-à-dire radialement et axialement,
le gabarit comprend axialement, c'est-à-dire dans le sens de la longueur, les sections reliées en série d'une barre de liaison (30) ; un mandrin (40) ; et une section de refroidissement, cette séquence définissant une direction aval pour le déplacement du tuyau et spécifiquement dans lequel ;
la section de refroidissement comprend :
une chambre de refroidissement (50)
et
la chambre de refroidissement (50) étant située en aval du mandrin (40) et configurée pour recevoir le matériau de tuyau polymère depuis le mandrin (40), la chambre de refroidissement étant définie en amont par le mandrin (40) et en aval par un organe (60) d'étanchéité aval et, en utilisation, axialement par le matériau de tuyau polymère provenant du mandrin (40), dans lequel ;
la chambre de refroidissement est configurée pour recevoir un volume d'un fluide, appelé second fluide, consistant en gaz, de préférence de l'air, depuis un canal (38) au sein de la barre de liaison (30), via un premier régulateur (52) de pression, et l'organe (60) d'étanchéité aval comprend un second régulateur (62) de pression destiné à libérer le second fluide en aval de la section de refroidissement, et dans lequel la section de refroidissement ne comprend pas de moyen pour renvoyer le second fluide à des fins de transport en amont par la barre de liaison (30).

2. Système (10) selon la revendication 1, dans lequel la section de refroidissement comprend en outre une partie cylindrique (70), positionnée entre le mandrin (40) et la chambre de refroidissement (50), la partie cylindrique (70) comprenant :
un cylindre qui s'étend en aval de la face arrière du mandrin (40), le diamètre de la partie cylindrique n'étant pas supérieur au diamètre maximal du mandrin ;
la partie cylindrique (70) comprend en outre une pluralité d'ouvertures de surface configurées pour injecter le second fluide, consistant en gaz transporté depuis la barre de liaison (30), à des fins de lubrification de la partie cylindrique (70), et des ouvertures supplémentaires destinées à collecter le second fluide, les ouvertures destinées à injecter le fluide depuis le troisième canal (38) de la barre de liaison (30) étant positionnées en aval des ouvertures configurées pour collecter le second fluide provenant du mandrin (40).

3. Système (10) selon la revendication précédente, dans lequel le second fluide s'écoule à contre-courant par rapport à la direction de déplacement du matériau de tuyau.

4. Système (10) selon une quelconque revendication précédente, dans lequel la barre de liaison (30) comprend
une enveloppe extérieure (32), sur laquelle le tuyau est configuré pour passer, et, au sein de l'enveloppe (32), une pluralité de canaux est disposée à des fins de transport des fluides vers et depuis la barre de liaison (30) elle-même, ou vers le mandrin (40), ou vers la section de refroidissement, et
dans lequel la pluralité de canaux comprend :
un premier canal d'entrée configuré pour transporter un premier fluide depuis un premier canal (34) dans la barre de liaison (30) vers le mandrin (40),
un deuxième canal de fluide configuré pour transporter le premier fluide depuis le mandrin (40) en retour vers un deuxième canal (36) dans la barre de liaison (30), par exemple à des fins de recirculation ; et
un troisième canal d'entrée de fluide configuré pour transporter le second fluide depuis un troisième canal (38) dans la barre de liaison (40) vers la section de refroidissement.

5. Système (10) selon une quelconque revendication précédente, dans lequel le mandrin (40) destiné à l'expansion radiale du tuyau comprend :
une partie tronconique comprenant ; une ou plusieurs sections, chaque section, lorsqu'elle est inclinée, présentant son extrémité la plus étroite à proximité de la barre de liaison (30) et étant agencée de telle sorte que le diamètre de la partie conique du mandrin augmente à mesure que le mandrin (40) s'étend vers l'aval ;
la partie tronconique comprenant en outre facultativement ;
une pluralité d'ouvertures sur la surface du mandrin (40) destinées à injecter le premier fluide, transporté par la barre de liaison (30), à des fins de lubrification du passage du tuyau (20) sur la partie conique du mandrin, et
des ouvertures situées sur la surface du mandrin destinées à collecter le premier fluide injecté provenant du mandrin (40) à des fins de recirculation, et où une telle ouverture destinée à injecter le premier fluide est positionnée axialement en aval des ouvertures configurées pour collecter le premier fluide à des fins de renvoi et de transport en amont du premier fluide par la barre de liaison (30).

6. Système (10) selon une quelconque revendication précédente, dans lequel le mandrin (40) et/ou la chambre de refroidissement (50) comprend un ou plusieurs capteurs de pression configurés pour déterminer la pression du fluide à l'intérieur du matériau de tuyau.

7. Système (10) selon les revendications 4 à 6, dans lequel le dispositif de commande du système est configuré pour analyser les mesures provenant des capteurs de pression et, lorsque la pression du fluide dépasse la valeur souhaitée, le dispositif de commande est configuré pour :
a) augmenter la quantité de fluide injectée dans le système ;
b) ouvrir ou fermer les ouvertures de collecte dans le mandrin (40), la partie cylindrique (70) ou la barre de liaison (30) ;
c) ouvrir ou fermer les ouvertures d'injection dans le mandrin (40) et/ou la partie cylindrique (70) ;
d) régler les régulateurs de pression (52, 62) de la chambre de refroidissement (50) ; afin de ramener la pression du fluide d'au moins l'une parmi la partie tronconique du
mandrin (40), la partie cylindrique (70) et/ou la chambre de refroidissement (50) à la valeur souhaitée.

8. Système (10) selon une quelconque revendication précédente, dans lequel les canaux (34, 36, 38) au sein de la barre de liaison (30) sont concentriques.

9. Procédé d'utilisation du système selon l'une quelconque des revendications 1 à 8, le procédé comprenant :
l'injection par vis d'un matériau de tuyau chauffé dans une filière sur l'extrémité amont de la barre de liaison (30) ;
l'impact du matériau de tuyau sur une tête d'extrudeuse de la filière, pour façonner le matériau de tuyau en un cylindre creux autour de la barre de liaison (30) ;
la traction du matériau de tuyau le long de la barre de liaison (30) vers l'extrémité amont d'une partie conique d'un mandrin (40), le matériau de tuyau étant tiré sur la surface de la partie conique du mandrin (40) pour l'expansion de la paroi du cylindre de matériau de tuyau ;
le retrait du matériau de tuyau du mandrin (40) et l'insertion du matériau de tuyau dans une chambre de refroidissement (50) ;
dans lequel la chambre de refroidissement (50) reçoit un volume d'un second fluide depuis la barre de liaison (30), qui est injecté dans un espace délimité par l'intérieur du matériau de tuyau, le mandrin (40) et l'organe (60) d'étanchéité aval de la chambre de refroidissement (50), via un régulateur (52) de pression amont de la chambre de refroidissement (50) ; dans lequel le second fluide peut être libéré de l'espace de manière contrôlée via un régulateur (62) de pression aval de la chambre de refroidissement (50) ; et
la traction du tuyau formé depuis l'extrémité aval de la chambre de refroidissement (50).

10. Procédé selon la revendication 9, le procédé comprenant en outre, lorsque le système de refroidissement comprend une partie cylindrique (70), l'étape de :
traction du matériau de tuyau sur la surface d'une partie cylindrique (70) qui s'étend en aval du mandrin (40) ;
injection du second fluide depuis un troisième canal (38) au sein de la barre de liaison (30) à travers une pluralité d'ouvertures dans la surface de la partie cylindrique (70), entre la surface de la partie cylindrique (70) et le matériau de tube, le second fluide s'écoulant dans la direction amont ;
collecte du second fluide dans une pluralité d'ouvertures positionnées en amont des ouvertures d'injection sur la surface de la partie cylindrique (70), près de l'extrémité amont de la partie cylindrique ;
injection du second fluide collecté dans la chambre de refroidissement (50) via un canal reliant la pluralité d'ouvertures de collecte au premier régulateur de pression (51) de la chambre de refroidissement (50).

11. Procédé selon les revendications 9 ou 10, comprenant en outre l'injection d'un premier fluide depuis un canal (34) au sein de la barre de liaison (30) à travers une pluralité d'ouvertures dans la surface de la partie conique du mandrin (40), entre le mandrin (40) et le matériau de tuyau, le premier fluide s'écoulant sur le mandrin (40) dans la direction amont ;
la collecte du premier fluide dans une pluralité d'ouvertures positionnées en amont des ouvertures d'injection sur la surface du mandrin (40) ou de la barre de liaison (30) pour renvoyer le premier fluide vers un deuxième canal (36) de la barre de liaison (30) ;

12. Procédé selon l'une quelconque des revendications 9 à 11, dans lequel le système comprend un ou plusieurs capteurs de pression, le procédé comprenant en outre :
l'analyse des mesures provenant des capteurs de pression, la comparaison des valeurs à une valeur de pression souhaitée prédéterminée ;
suite à la détermination que la pression dépasse la valeur souhaitée, le réglage de la pression pour la ramener à la valeur souhaitée en réalisant un ou plusieurs parmi ce qui suit :
a) augmentation de la quantité de fluide injectée dans le système ;
b) ouverture ou fermeture des ouvertures de collecte dans le mandrin (40), la partie cylindrique (70) ou la barre de liaison (30) ;
c) ouverture ou fermeture des ouvertures d'injection dans le mandrin (40) et/ou la partie cylindrique (70) ;
d) réglage des régulateurs de pression (52, 62) de la chambre de refroidissement (50).

13. Procédé selon l'une quelconque des revendications 9 à 12, dans lequel le système comprend un ou plusieurs dispositifs de calibrage munis d'un capteur respectif destinés à déterminer la dimension du matériau de tuyau, le procédé comprenant en outre :
l'analyse des données provenant des capteurs ;
suite à la détermination que la dimension du matériau de tuyau se situe en dehors d'une plage souhaitée, le réglage du dispositif de calibrage pour remodeler le tuyau à la dimension souhaitée ; ou
la réalisation de l'une des étapes suivantes :
a) augmentation de la quantité de fluide injectée dans le système ;
b) ouverture ou fermeture des ouvertures de collecte dans le mandrin (40), la partie cylindrique (70) ou la barre de liaison (30) ;
c) ouverture ou fermeture des ouvertures d'injection dans le mandrin (40) et/ou la partie cylindrique (70) ;
d) réglage des régulateurs de pression (52, 62) de la chambre de refroidissement (50) ;
pour ajuster la pression au sein du matériau de tuyau afin de remodeler le matériau de tuyau pour qu'il se situe dans la plage de dimensions souhaitée.

14. Procédé selon l'une quelconque des revendications 9 à 13, comprenant en outre la pulvérisation, par le logement (80) de chambre de refroidissement, de fluide de refroidissement sur la surface extérieure du matériau de tuyau à l'intérieur de la chambre de refroidissement (50).

15. Procédé selon l'une quelconque des revendications 9 à 14, comprenant en outre la formation, par le logement (80) de chambre de refroidissement, d'un vide partiel entre le logement (80) et le matériau de tuyau à l'intérieur de la chambre de refroidissement (50).
